# EUROPEAN PATENT APPLICATION

(11) **EP 4 181 445 A1**
(43) Date of publication of application: **17.05.2023**
(21) Application number: 21838308.1
(22) Date of filing: 21.06.2021
(51) Int. Cl.: H04L 5/00, H04W 72/04, H04W 72/12, H04B 17/373, H04L 1/00, H04J 11/00

(54) **METHOD AND DEVICE FOR SIGNAL TRANSMISSION/RECEPTION USING AGGREGATED CARRIERS**

(30) Priority: 10.07.2020 KR 20200085608; 18.01.2021 KR 20210007093; 08.02.2021 KR 20210017911
(71) Applicant: Electronics and Telecommunications Research Institute, Daejeon 34129 (KR)
(72) Inventor: MOON, Sung Hyun, Daejeon 34129 (KR); KIM, Cheul Soon, Daejeon 34129 (KR); LEE, Jung Hoon, Daejeon 34129 (KR)
(74) Representative: Betten & Resch
(86) International application number: PCT/KR2021/007756
(87) International publication number: WO 2022/010132

(57) **Abstract**

Disclosed are a method and a device for signal transmission or reception using aggregated carriers. An operation method of a terminal comprises the steps of: receiving configuration information of multiple cells from a base station; receiving configuration information of a first search space set, which is configured in a first cell among the multiple cells and for scheduling of the first cell, from the base station; and receiving configuration information of a second search space set, which is configured in a second cell among the multiple cells and for scheduling of the first cell, from the base station.

## Description

### [Technical Field]

The present disclosure relates to a technique for transmitting and receiving signals in a communication system, and more specifically, to a technique for transmitting and receiving signals by using aggregated carriers.

### [Background Art]

In order to vitalize the ecosystem of the fourth industrial revolution, new and diverse communication infrastructure markets are being pioneered. To this end, a more advanced communication system (e.g., new radio (NR) communication system) than a conventional communication system (e.g., long term evolution (LTE) communication system) is being considered. The NR communication system may support not only a frequency band below 6GHz but also 6GHz or higher frequency band, and may support various communication services and scenarios as compared to the LTE communication system. For example, usage scenarios of the NR communication system may include enhanced mobile broadband (eMBB), ultra-reliable low-latency communication (URLLC), massive machine type communication (mMTC), and the like. Communication technologies are needed to satisfy the various requirements of the industry.

Meanwhile, the communication system may support carrier aggregation technology, and communication between a base station and a terminal may be performed using aggregated carriers. In this case, methods for efficiently performing downlink communication and/or uplink communication using the aggregated carriers are needed.

### [Disclosure]

### [Technical Problem]

An objective of the present disclosure for solving the above-described problem is directed to providing a method and an apparatus for transmitting and receiving signals by using aggregated carriers in a communication system.

### [Technical Solution]

An operation method of a terminal, according to a first exemplary embodiment of the present disclosure for achieving the objective, may comprise: receiving configuration information of a plurality of cells from a base station; receiving, from the base station, configuration information of a first search space set for scheduling of a first cell, the first search space set being configured in the first cell among the plurality of cells; receiving, from the base station, configuration information of a second search space set for scheduling of the first cell, the second search space set being configured in a second cell among the plurality of cells; receiving downlink control information (DCI) from the base station in one of the first search space set and the second search space set by performing a first monitoring operation on the first search space set and a second monitoring operation on the second search space set; and receiving a data channel from the base station based on the DCI in the first cell, wherein the first search space set and the second search space set are UE-specific search space sets (USSs).

The first monitoring operation may include a blind decoding operation on physical downlink control channel (PDCCH) candidate(s) included in the first search space set, the second monitoring operation may include a blind decoding operation on PDCCH candidate(s) included in the second search space set, and the first monitoring operation and the second monitoring operation may be both performed within a reference time.

An upper limit value of a number of PDCCH blind decodings for scheduling of the first cell may be applied for each reference time, and the reference time may be determined as one slot of one cell among the first cell and the second cell according to subcarrier spacings applied to the first cell and the second cell.

The data channel may be a physical downlink shared channel (PDSCH) including unicast data.

The operation method may further comprise receiving, from the base station, configuration information of a third search space set for scheduling of the first cell, the third search space set being configured in the first cell, wherein monitoring operations are performed on the first search space set, the second search space set, and the third search space set, and the third search space set is a common search space (CSS) set.

Zero padding may be applied to a first DCI format monitored in the first search space set or the first DCI format monitored in the second search space set so that a size of the first DCI format monitored in the first search space set is aligned with a size of the first DCI format monitored in the second search space set, and the DCI may have the first DCI format.

A monitoring operation on the first DCI format may be configured by a radio resource control (RRC) message from the base station, and the first DCI format may be a DCI format 1_1 or DCI format 1_2.

Presence or absence of one or more fields in the DCI may be determined according to a search space set or cell in which the DCI is received.

The one or more fields may include a carrier indicator field (CIF).

The first cell may be a primary cell, and the second cell may be a secondary cell.

An operation method of a base station, according to a second exemplary embodiment of the present disclosure for achieving the objective, may comprise: transmitting configuration information of a plurality of cells to a terminal; transmitting, to the terminal, configuration information of a first search space set for scheduling of a first cell, the first search space set being configured in the first cell among the plurality of cells; transmitting, to the terminal, configuration information of a second search space set for scheduling of the first cell, the second search space set being configured in a second cell among the plurality of cells; transmitting downlink control information (DCI) to the terminal in one of the first search space set and the second search space set; and transmitting a data channel to the terminal based on the DCI in the first cell, wherein the first search space set and the second search space set are UE-specific search space sets (USSs).

The data channel may be a physical downlink shared channel (PDSCH) including unicast data.

The operation method may further comprise transmitting, to the terminal, configuration information of a third search space set for scheduling of the first cell, the third search space set being configured in the first cell, wherein the DCI is transmitted in one search space set among the first search space set, the second search space set, and the third search space set, and the third search space set is a common search space (CSS) set.

Zero padding may be applied to a first DCI format monitored in the first search space set or the first DCI format monitored in the second search space set so that a size of the first DCI format monitored in the first search space set is aligned with a size of the first DCI format monitored in the second search space set, and the DCI may have the first DCI format.

A monitoring operation of the first DCI format may be configured by a radio resource control (RRC) message from the base station, and the first DCI format may be a DCI format 1_1 or DCI format 1_2.

Presence or absence of one or more fields in the DCI may be determined according to a search space set or cell in which the DCI is received, and the one or more fields may include a carrier indicator field (CIF).

The first cell may be a primary cell, and the second cell may be a secondary cell.

A terminal, according to a third exemplary embodiment of the present disclosure for achieving the objective, may comprise: a processor; a memory electronically communicating with the processor; and instructions stored in the memory, wherein when executed by the processor, the instructions cause the terminal to: receive configuration information of a plurality of cells from a base station; receive, from the base station, configuration information of a first search space set for scheduling of a first cell, the first search space set being configured in the first cell among the plurality of cells; receive, from the base station, configuration information of a second search space set for scheduling of the first cell, the second search space set being configured in a second cell among the plurality of cells; receive downlink control information (DCI) from the base station in one of the first search space set and the second search space set by performing a first monitoring operation on the first search space set and a second monitoring operation on the second search space set; and receive a data channel from the base station based on the DCI in the first cell, wherein the first search space set and the second search space set are UE-specific search space sets (USSs).

The first monitoring operation and the second monitoring operation may be both performed within a reference time, and the reference time may be determined as one slot of one cell among the first cell and the second cell according to subcarrier spacings applied to the first cell and the second cell.

The instructions may further cause the terminal to receive, from the base station, configuration information of a third search space set for scheduling of the first cell, the third search space set being configured in the first cell, wherein monitoring operations are performed on the first search space set, the second search space set, and the third search space set, and the third search space set is a common search space (CSS) set.

### [Advantageous Effects]

According to the present disclosure, a base station may configure search space sets in a plurality of cells, transmit control information in one search space set among the search space sets, and transmit data based on the control information. A terminal may obtain the control information by monitoring the search space sets configured by the base station, and may receive the data based on the control information. According to the above-described operations, downlink communication using aggregated carriers may be efficiently performed. Accordingly, the performance of the communication system may be improved.

### [Description of Drawings]

FIG. 1 is a conceptual diagram illustrating a communication system.
FIG. 2 is a block diagram illustrating a communication node constituting a communication system.
FIG. 3 is a conceptual diagram illustrating a carrier aggregation method and a method of arranging aggregated carriers.
FIG. 4 is a conceptual diagram illustrating a method of mapping search space sets in cross-carrier scheduling according to (Method 100).
FIG. 5 is a conceptual diagram illustrating a method of switching a bandwidth part in cross-carrier scheduling according to (Method 100).
FIG. 6 is a conceptual diagram illustrating a first method of applying a PDSCH default QCL by a plurality of serving cells.
FIG. 7 is a conceptual diagram illustrating a second method of applying a PDSCH default QCL by a plurality of serving cell.
FIG. 8 is a conceptual diagram illustrating a method for PDSCH scheduling by a plurality of serving cells.

### [Modes of the Invention]

While the present disclosure is susceptible to various modifications and alternative forms, specific embodiments are shown by way of example in the drawings and described in detail. It should be understood, however, that the description is not intended to limit the present disclosure to the specific embodiments, but, on the contrary, the present disclosure is to cover all modifications, equivalents, and alternatives that fall within the spirit and scope of the present disclosure.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present disclosure. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present disclosure. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present disclosure pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present disclosure will be described in detail with reference to the accompanying drawings. In describing the present disclosure, to facilitate the entire understanding, like numbers refer to like elements throughout the description of the figures and the repetitive description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, `LTE' may refer to `4G communication system', `LTE communication system', or `LTE-A communication system', and 'NR' may refer to `SG communication system' or `NR communication system'.

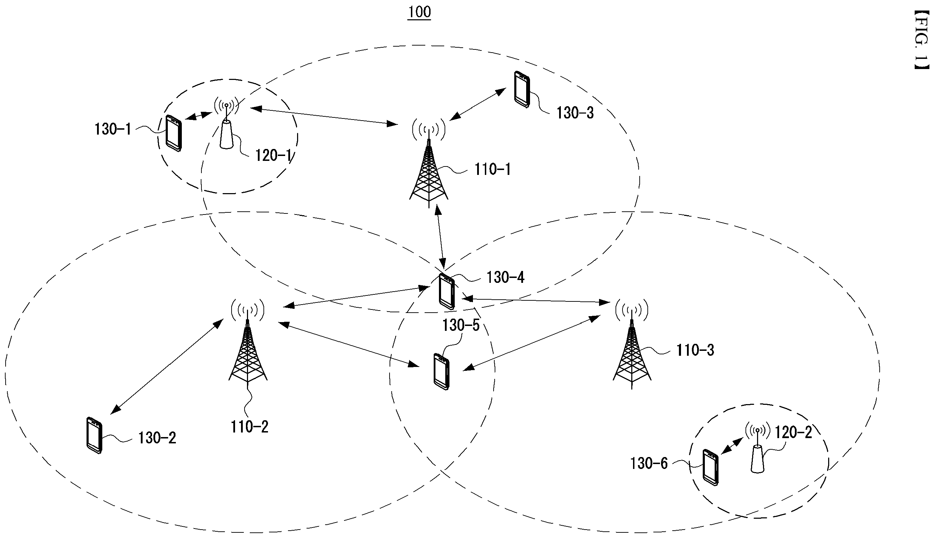

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may have the following structure.

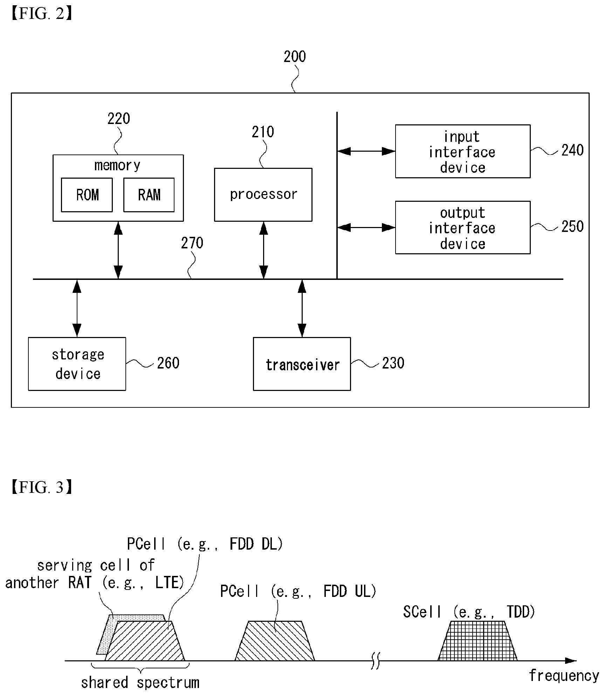

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring back to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Methods for transmitting and receiving signals in a communication system will be described. Here, the signal may be transmitted using a plurality of carriers (e.g., aggregated carriers). The following exemplary embodiments may be applied to the NR communication system. In addition, the following exemplary embodiments may be applied not only to the NR communication system but also to other communication systems (e.g., LTE communication system, fifth generation (5G) communication system, sixth generation (6G) communication system, or the like).

A numerology applied to physical signals and channels in the communication system (e.g., NR communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. Adjacent subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g., extended CP) may be additionally supported for a specific subcarrier spacing (e.g., 60 kHz).

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. A length of an actual time resource used for transmission, measurement, scheduling, resource configuration, etc. may not match the length of a slot. A mini-slot may include consecutive symbol(s), and a length of a mini-slot may be shorter than a length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., a length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE in the frequency domain may include one or more RBs.

In the NR communication system, a slot (e.g., slot format) may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the operation configured by the base station periodically may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g., overridden flexible symbol).

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The base station and the terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. RBs constituting one bandwidth part may be consecutive in the frequency domain. One numerology may be used for transmission of signals (e.g., transmission of control channel or data channel) in one bandwidth part. In exemplary embodiments, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology (e.g., a subcarrier spacing and a CP length) applied to the bandwidth part. Also, the configuration information of the bandwidth part may further include information indicating a position of a start RB (e.g., start PRB) of the bandwidth part and information indicating the number of RBs (e.g., PRBs) constituting the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, an RB may mean a common RB (CRB). Alternatively, an RB may mean a PRB or a virtual RB (VRB). In the NR communication system, a CRB may refer to an RB constituting a set of consecutive RBs (e.g., common RB grid) based on a reference frequency (e.g., point A). Carriers, bandwidth part, and the like may be arranged on the common RB grid. That is, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A minimum resource unit constituting a PDCCH may be a resource element group (REG). An REG may be composed of one PRB (e.g., 12 subcarriers) in the frequency domain and one OFDM symbol in the time domain. Thus, one REG may include 12 resource elements (REs). A demodulation reference signal (DMRS) for demodulating a PDCCH may be mapped to 3 REs among 12 REs constituting the REG, and control information (e.g., modulated DCI) may be mapped to the remaining 9 REs.

One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of six REGs.

A control resource set (CORESET) may be a resource region in which the terminal performs a blind decoding on PDCCHs. The CORESET may be composed of a plurality of REGs. The CORESET may consist of one or more PRBs in the frequency domain and one or more symbols (e.g., OFDM symbols) in the time domain. The symbols constituting one CORESET may be consecutive in the time domain. The PRBs constituting one CORESET may be consecutive or non-consecutive in the frequency domain. One DCI (e.g., one DCI format or one PDCCH) may be transmitted within one CORESET. A plurality of CORESETs may be configured with respect to a cell and a terminal, and the plurality of CORESETs may overlap in time-frequency resources.

A CORESET may be configured in the terminal by a PBCH (e.g., system information transmitted through the PBCH). The identifier (ID) of the CORESET configured by the PBCH may be 0. That is, the CORESET configured by the PBCH may be referred to as a CORESET #0. A terminal operating in an RRC idle state may perform a monitoring operation in the CORESET #0 in order to receive a first PDCCH in the initial access procedure. Not only terminals operating in the RRC idle state but also terminals operating in the RRC connected state may perform monitoring operations in the CORESET #0. The CORESET may be configured in the terminal by other system information (e.g., system information block type 1 (SIB1)) other than the system information transmitted through the PBCH. For example, for reception of a random access response (or Msg2) in a random access procedure, the terminal may receive the SIB 1 including the configuration information of the CORESET. Also, the CORESET may be configured in the terminal by terminal-specific higher layer signaling (e.g., RRC signaling).

In each downlink bandwidth part, one or more CORESETs may be configured for the terminal. The terminal may monitor PDCCH candidate(s) for a CORESET configured in a downlink active bandwidth part in the corresponding downlink active bandwidth part. Alternatively, the terminal may monitor PDCCH candidate(s) for a CORESET (e.g., CORESET #0) configured in a downlink bandwidth part other than a downlink active bandwidth part in the downlink active bandwidth part. The initial downlink active bandwidth part may include the CORESET #0 and may be associated with the CORESET #0. The CORESET #0 having a quasi-co-location (QCL) relation with an SS/PBCH block may be configured for the terminal in a primary cell (PCell), a secondary cell (SCell), and a primary secondary cell (PSCell). In the secondary cell (SCell), the CORESET #0 may not be configured for the terminal.

A search space may be a set of candidate resource regions through which PDCCHs can be transmitted. The terminal may perform a blind decoding on each of the PDCCH candidates within a predefined search space. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH. The terminal may periodically monitor a search space, and may monitor a search space at one or more time positions (e.g., PDCCH monitoring occasions, CORESETs) within one period.

A PDCCH candidate may be configured with CCEs selected by a predefined hash function within an occasion of the CORESET or the search space. The search space may be defined and configured for each CCE aggregation level. In this case, a set of search spaces for all CCE aggregation levels may be referred to as a `search space set'. In exemplary embodiments, 'search space' may mean `search space set', and `search space set' may mean `search space'.

A search space set may be logically associated with or corresponded to one CORESET. One CORESET may be logically associated with or corresponded to one or more search space sets. A search space set for transmitting a common DCI or a group-common DCI may be referred to as a common search space set (hereinafter, referred to as `CSS set'). A common DCI or a group-common DCI may include resource allocation information of a PDSCH for system information transmission, paging information, a power control command, SFI, a preemption indicator, and/or the like. In case of the NR communication system, a common DCI may correspond to DCI formats 0_0, 1_0, and the like, and a cyclic redundancy check (CRC) of a common DCI transmitted to the terminal may be scrambled with a system information-radio network temporary identifier (SI-RNTI), paging-RNTI (P-RNT), random access-RNTI (RA-RNTI), temporary cell-RNTI (TC-RNTI), or the like. A group-common DCI may correspond to DCI format 2_X (X = 0, 1, 2, ...), and a CRC of the group-common DCI transmitted to the terminal may be scrambled with a slot format indicator-RNTI (SFI-RNTI), or the like. The CSS set may include Type 0, Type 0A, Type 1, Type 2, and Type 3 CSS sets.

A search space set for transmitting a UE-specific DCI may be referred to as a UE-specific search space set (hereinafter, referred to as `USS set'). A UE-specific DCI may include scheduling and resource allocation information for a PDSCH, PUSCH, or PSSCH. In case of the NR communication system, a UE-specific DCI may correspond to DCI formats 0_1, 0_2, 1_1, 1_2, 3_0, 3_1, and the like, and a CRC of the UE-specific DCI transmitted to the terminal may be scrambled with a C-RNTI, configured scheduling-RNTI (CS-RNTI), modulation and coding scheme-C-RNTI (MCS-C-RNTI), or the like. Considering scheduling freedom or fallback transmission, a UE-specific DCI may be transmitted even in a CSS set. In this case, a UE-specific DCI may be transmitted according to a DCI format corresponding to a common DCI. For example, the terminal may monitor a PDCCH (e.g., DCI formats 0_0, 0_1) whose CRC is scrambled with a C-RNTI, CS-RNTI, MCS-C-RNTI, or the like in a CSS set.

The terminal may monitor a fallback DCI (or, fallback DCI format) in a CSS set. The payload size of the fallback DCI format may be fixed. Even when RRC reconfiguration for a corresponding serving cell and/or bandwidth part is performed, the size of the fallback DCI (e.g., the payload size of the fallback DCI format) may not be changed. Even while an RRC reconfiguration procedure is being performed, a fallback DCI may be used for scheduling. In the NR communication system, a fallback DCI may include DCI formats 0_0, 1_0, and the like. The terminal may monitor a non-fallback DCI (or, non-fallback DCI format) in a USS set. The payload size of the non-fallback DCI format may be changed by RRC reconfiguration for a corresponding serving cell and/or bandwidth part. In the NR communication system, a non-fallback DCI may include DCI formats 0_1, 1_1, 0_2, 1_2, 3_0, 3_1, and the like. Also, the terminal may monitor a fallback DCI (or, fallback DCI format) in a USS set. The terminal may receive configuration information indicating monitoring of only one DCI format among a fallback DCI and a non-fallback DCI in each USS set from the base station. A fallback DCI may correspond to a common DCI format, and may also correspond to a terminal-specific (i.e., UE-specific) DCI format transmitted according to a common DCI format. A non-fallback DCI may correspond to a UE-specific DCI format (e.g., UE-specific DCI format transmitted according to a DCI format other than a common DCI format). The monitoring operation of a non-fallback DCI may be configured to the terminal through a signaling procedure (e.g., RRC signaling procedure) from the base station.

A type 0 CSS set may be used for reception of a DCI scheduling a PDSCH including SIB 1, and may be configured through a PBCH or cell-specific RRC signaling. An ID of the type 0 CSS set may be assigned or set as 0. The type 0 CSS set may be logically associated with the CORESET #0.

The terminal may assume that a PDCCH DM-RS has a QCL relation with a certain signal (e.g., SS/PBCH block, CSI-RS, PDSCH DM-RS, PDCCH DM-RS, etc.). In addition, since a PDCCH has the same antenna port as a PDCCH DM-RS, the PDCCH and the PDCCH DM-RS may have a QCL relation with each other. Accordingly, the terminal may obtain information on large-scale propagation characteristics of a radio channel experienced by the PDCCH and PDCCH DM-RS through the above-described QCL assumption, and may utilize the obtained large-scale propagation characteristics for channel estimation, reception beamforming, or the like. QCL parameters may include a delay spread, Doppler spread, Doppler shift, average gain, average delay, spatial Rx parameter, and the like. The spatial Rx parameter may correspond to characteristics such as a reception beam, a reception channel spatial correlation, and a transmission/reception beam pair. For convenience, the spatial Rx parameter may be referred to as 'spatial QCL'. A PDCCH may be used as a meaning including a PDCCH DM-RS, and an expression `a PDCCH has a QCL relation with a signal' may include a meaning that a DM-RS of the PDCCH has a QCL relation with the signal. A signal having a QCL relation with a PDCCH or a resource of the signal may be referred to as a QCL source, QCL source signal, QCL source resource, or the like.

PDCCHs transmitted in the same CORESET, search space set(s) corresponding to the same CORESET, and/or PDCCH monitoring occasion(s) corresponding to the same CORESET may have the same QCL relation. That is, a set unit in which the terminal assumes the same QCL may be a CORESET, and a QCL assumption for each CORESET may be independent. In an exemplary embodiment, a QCL, a QCL source, etc. of a certain CORESET may mean a QCL, a QCL source, etc. of a PDCCH received through the corresponding CORESET, respectively. Exceptionally, different QCL assumptions may be applied to search space sets corresponding to one CORESET. For example, a search space set (e.g., type 1 CSS set) for monitoring an RA-RNTI and other search space sets may have different QCL relations.

A QCL relation or QCL assumption (e.g., QCL source, QCL type, etc.) of a CORESET may be determined by a predefined method. For example, the terminal may assume that a PDCCH DM-RS received through a certain CORESET or a certain search space set has, with respect to a predefined QCL type, a QCL relation with an SS/PBCH block and/or CSI-RS selected when performing an initial access or random access procedure. Here, the QCL type may refer to a set of one or more QCL parameter(s). Alternatively, a QCL relation or QCL assumption (e.g., QCL source, QCL type, etc.) of a CORESET may be signaled from the base station to the terminal (e.g., through one or a combination of two or more among RRC signaling, medium access control (MAC) control element (CE) signaling, and DCI signaling). That is, the base station may configure a transmission configuration information (TCI) state for a CORESET to the terminal. In general, a TCI state may include at least one of an ID of a signal (e.g., a QCL source or QCL source resource of a PDCCH DM-RS) having a QCL relation with a DM-RS (e.g., PDCCH DM-RS) of a physical channel to which the TCI is applied and/or a QCL type therefor. That is, the TCI state may include one or more {ID and/or QCL type}(s). For example, the base station may configure one or more TCI state candidates for each CORESET through RRC signaling to the terminal, and may indicate or configure one TCI state used for CORESET monitoring of the terminal among the one or more TCI state candidates through MAC signaling (or DCI signaling). When there is one TCI state candidate configured by RRC signaling, the MAC signaling procedure (or DCI signaling procedure) may be omitted. The terminal may perform a PDCCH monitoring and reception operation for the corresponding CORESET based on the TCI state configuration information received from the base station.

Meanwhile, in a communication system, beam operations in a high-frequency band and a low-frequency band may be different from each other. Since a path loss of a signal by a channel is relatively small in a low frequency band (e.g., a band below 6 GHz), the signal may be transmitted and received using a beam having a wide beamwidth. In particular, in case of a control channel, the entire coverage of a cell (or sector) may be covered even with a single beam. However, in a high frequency band (e.g., a band above 6 GHz) where a path loss of a signal is large, beamforming by a large-scale antenna may be used to extend a signal reach. In addition, beamforming may be applied not only to a data channel but also to a common signal and a control channel. A communication node (e.g., base station) may form a beam having a narrow beamwidth through a plurality of antennas, and transmit and receive signals multiple times by using a plurality of beams having different directivities to cover the entire spatial area of a cell (or sector). Such an operation of repeatedly transmitting a signal over a plurality of time resources using a plurality of beams may be referred to as a `beam sweeping operation'. A system for transmitting a signal using a plurality of beams having such a narrow beamwidth may be referred to as a `multi-beam system'.

The multi-beam system may operate based on beam management. The terminal may measure a beam quality for a received signal (e.g., SS/PBCH block, CSI-RS, etc.), and may report a measurement result of the beam quality to the base station. For example, the terminal may calculate a beam quality measurement value such as a reference signal received power (RSRP), signal-to-interference-plus-noise ratio (SINR), etc. for each beam (e.g., each signal, each resource), and report optimal beam(s) and measurement value(s) corresponding thereto to the base station. The base station may determine a transmission beam for the terminal based on the measurement information of the beam quality received from the terminal. In addition, the base station may configure a TCI state for reception of physical signals and channels (e.g., PDCCH, PDSCH, CSI-RS, PUCCH, PUSCH, SRS, PRACH, etc.) of the terminal to the terminal based on the measurement information of the beam quality received from the terminal.

Meanwhile, a carrier aggregation scheme may be applied to the terminal. That is, the terminal may receive configuration information of a plurality of carriers from the base station, may aggregate the plurality of carriers, and may communicate with the base station using the aggregated carriers. In exemplary embodiments, a carrier may be interpreted to mean a cell or a serving cell, and each of a cell and a serving cell may be interpreted to mean a carrier. In the NR communication system, a maximum of 16 carriers may be aggregated in one terminal. When a maximum carrier bandwidth is 400 MHz, one terminal may perform communication using a bandwidth of up to 6.4 GHz (=16×400 MHz). Accordingly, a peak data rate of the terminal may increase. The aggregated carriers may be contiguous in the frequency domain. Alternatively, the aggregated carriers may not be contiguous in the frequency domain. In addition, the plurality of carriers may belong to the same frequency band or different frequency bands. One or more downlink bandwidth parts and one or more uplink bandwidth parts may be configured in each of the carriers, and a sidelink bandwidth part may be configured additionally in a specific carrier. The terminal may perform communication (e.g., transmission operation, reception operation, measurement operation) in an active bandwidth part of an activated carrier(s).

The terminal to which the carrier aggregation scheme is applied may have one primary cell (PCell) and one or more secondary cell(s) (SCell(s)). In exemplary embodiments, a PCell may be referred to as a first cell, and an SCell may be referred to as a second cell. Alternatively, a PCell may be referred to as a second cell, and an SCell may be referred to as a first cell. The terminal may determine a PCell in an initial cell search procedure, a cell (re)selection procedure, a handover procedure, and the like. On the other hand, an SCell may be configured to the terminal (e.g., terminal in the RRC connected state) through a signaling message (e.g., RRC signaling message) transmitted from the base station. The SCell may be activated or deactivated. Activation and/or deactivation of the SCell may be controlled through a signaling message (e.g., DCI, medium access control (MAC) control element (CE), RRC signaling, etc.) transmitted from the base station. The PCell and SCell may be configured terminal (UE)-specifically. For example, the same serving cell may operate as a PCell for a first terminal and may operate as an SCell for a second terminal. Alternatively, a plurality of terminals may use different serving cells as PCells. In a frequency division duplex (FDD) cell, a serving cell may be configured with a downlink carrier and/or an uplink carrier. Also, a serving cell may include a plurality of uplink carriers and/or a plurality of downlink carriers. When a serving cell includes a plurality of uplink carriers, the serving cell may include a supplementary uplink carrier. When a serving cell includes a plurality of downlink carriers, the serving cell may include a supplementary downlink carrier.

When the carrier aggregation scheme is used, a DCI (or PDCCH) for scheduling a data channel may be transmitted in a carrier equal to a carrier through which the corresponding data channel is transmitted. This scheme may be referred to as a self-scheduling scheme. Alternatively, a DCI (or PDCCH) for scheduling a data channel may be transmitted in a carrier different from a carrier through which the corresponding data channel is transmitted. This scheme may be referred to as a cross-carrier scheduling scheme. The cross-carrier scheduling scheme may be used for a purpose of offloading a control channel, controlling interference between control channels, and the like. In this case, the data channel may be a data channel including unicast data or UE-specific data (e.g., downlink-shared channel (DL-SCH), uplink-shared channel (UL-SCH)). In addition, the DCI for scheduling the data channel may refer to a DCI (or DCI format) having a CRC scrambled by C-RNTI, CS-RNTI, or MCS-C-RNTI. One of the self-scheduling scheme and the cross-carrier scheduling scheme may be applied to each carrier or each serving cell.

The carrier through which the scheduling DCI is transmitted may be referred to as a scheduling cell, and a carrier through which the data channel is transmitted may be referred to as a scheduled cell. When the self-scheduling scheme is used, the scheduling cell may be the same as the scheduled cell. When the cross-carrier scheduling scheme is used, the scheduling cell may be different from the scheduled cell. The terminal may perform a PDCCH monitoring operation corresponding to a scheduled cell in a scheduling cell. An association relationship between a scheduling cell and a scheduled cell may be configured to the terminal through a higher layer signaling (e.g., RRC signaling) procedure.

HARQ-acknowledgement (ACK) information, which is a reception response of a PDSCH, may be transmitted on a PUCCH. In this case, the terminal may transmit the PUCCH including the HARQ-ACK information to the base station in the PCell. In addition, for a purpose of reducing overhead of PUCCHs concentrated on the PCell, the terminal may additionally receive, from the base station, configuration information of a cell (hereinafter, referred to as a `PUCCH cell') in which a PUCCH including HARQ-ACK information can be transmitted, in addition to the PCell. For example, one PCell and one SCell may be configured as PUCCH cells in the terminal. In addition, the terminal may receive configuration information of a PUCCH cell group associated with each PUCCH cell from the base station. HARQ-ACK information for a PDSCH transmitted in a serving cell belonging to a PUCCH cell group may be transmitted through a PUCCH cell associated with the PUCCH cell group.

Meanwhile, a communication service provider may desire to simultaneously provide services of heterogeneous communication systems (e.g., NR communication system and LTE communication system) using the same frequency band. In order to support this operation, a carrier of the NR communication system (hereinafter referred to as `NR carrier') and a carrier of the LTE communication system (hereinafter referred to as `LTE carrier') may overlap in the frequency domain, and the NR carrier and the LTE carrier may dynamically share a spectrum according to traffic conditions. That is, an NR signal of the NR carrier and an LTE signal of the LTE carrier may be dynamically multiplexed and transmitted in time, frequency, and/or spatial resources within the same frequency region. For example, when the traffic of the LTE communication system is high, the base station (or the base station of the NR communication system) may transmit less signals in the NR carrier overlapping the LTE carrier. When the traffic of the LTE communication system is small, the base station (or the base station of the NR communication system) may transmit signals using more physical resources in the NR carrier overlapping the LTE carrier.

FIG. 3 is a conceptual diagram illustrating a carrier aggregation method and a method of arranging aggregated carriers.

Referring to FIG. 3, in a communication system (e.g., NR communication system), a base station may configure a plurality of cells (e.g., PCell and SCell), and may transmit configuration information of the plurality of cells to a terminal. For example, one PCell and at least one SCell may be aggregated in the terminal. The PCell may be an FDD cell, and the SCell may be a TDD cell. In this case, a downlink carrier of the PCell may overlap with a carrier (e.g., LTE carrier) of another communication system. In this case, a part of downlink physical resources of the PCell may be used for LTE signal transmission. Alternatively, a part of downlink physical resources of the PCell may be occupied in advance for LTE signal transmission. Therefore, a size of resource region available for NR signal transmission in the downlink carrier of the PCell may be restricted. In particular, a CORESET may be configured in the restricted resource region of the PCell, and the above-described restriction may cause a decrease in a PDCCH transmission capacity of the PCell. If the PDCCH transmission capacity is small, the base station may not be able to schedule a data channel even though resources available for data channel (e.g., PUSCH) transmission (e.g., uplink resources of the PCell) are sufficient. Accordingly, a spectral efficiency may decrease, and a transmission latency may increase.

### [Cross-carrier scheduling from SCell to PCell]

As a method for solving the above problem, a cross-carrier scheduling scheme may be applied to the PCell. For example, an SCell may be configured and/or activated in the terminal, and cross-carrier scheduling from the SCell to the PCell may be used. The base station may transmit a DCI (or PDCCH) for scheduling a data channel (e.g., PDSCH, PUSCH) of the PCell to the terminal through a cell (e.g., SCell) other than the PCell. When it is determined that a DCI received from the SCell is a DCI for the PCell (e.g., data channel scheduling of the PCell), the terminal may perform a PDSCH reception operation or a PUSCH transmission operation in the PCell based on scheduling information of the DCI. For example, a DCI received in a specific CORESET, specific search space set, specific monitoring occasion, etc. of the SCell may be regarded as a DCI for the PCell, and this operation may be configured (or indicated) to the terminal. When a DCI received from the SCell includes a carrier indicator field (CIF) corresponding to the PCell, the terminal may regard the DCI as a DCI for the PCell.

In the following exemplary embodiments, a data channel of the PCell may be a data channel including unicast data or UE-specific data (e.g., DL-SCH, UL-SCH). Alternatively, the data channel of the PCell may be a data channel allocated by a scheduling DCI for the PCell regardless of whether the data channel includes UE-specific data. The scheduling DCI for the PCell may refer to a DCI (or DCI format) having a CRC scrambled by C-RNTI, CS-RNTI, or MCS-C-RNTI. For example, in the NR communication system, the scheduling DCI for the PCell may be configured with DCI format 0_1, 1_1, 0_2, 1_2, or the like. The scheduling DCI for the PCell may be a DCI transmitted through a USS set. That is, a search space set of the SCell in which the terminal performs PDCCH monitoring for the PCell may include at least a USS set.

In the following exemplary embodiments, a PCell may be an FDD cell or a TDD cell. In addition, an SCell may be an FDD cell or a TDD cell. When cross-carrier scheduling from the SCell to the PCell is used, duplex schemes in the PCell and the SCell may be the same or different. For example, the PCell may be an FDD cell, and the SCell may be a TDD cell. In the following exemplary embodiments, numerologies (e.g., subcarrier spacing and/or CP type) in the PCell and the SCell (or bandwidth parts activated in the PCell and the SCell) may be the same or different. For example, a subcarrier spacing of the activated bandwidth part of the PCell may be 15 kHz, and a subcarrier spacing of the activated bandwidth part of the SCell may be 30 kHz.

When cross-carrier scheduling from the SCell to the PCell is used, the terminal may monitor a scheduling DCI for the PCell in a USS set of the SCell. For example, a non-fallback DCI format for the PCell may be monitored in a USS set of the SCell, and this operation may be configured to the terminal. The terminal may perform monitoring in a USS set of the SCell according to the above-described configuration. Meanwhile, the payload size of the non-fallback DCI format for the PCell may be changed by RRC reconfiguration of the PCell (e.g., change of configuration parameters for the active bandwidth part of the PCell, or the like). Therefore, the terminal may fail to receive the non-fallback DCI format for the PCell in the SCell while performing an RRC reconfiguration procedure of the PCell due to ambiguity of a DCI size. In exemplary embodiments, `DCI size', `DCI format size', 'DCI payload size', and `DCI format payload size' may have the same meaning. A beam failure may occur when a link performance of the SCell is degraded or a CORESET beam of the SCell is invalid. When a beam failure occurs, it may be difficult for the terminal to receive a DCI for the PCell in the SCell.

As a method for solving the above-described problem, for scheduling of the PCell (e.g., reception of scheduling information), the terminal may perform not only a monitoring operation of a non-fallback DCI format in a USS set of the SCell, but also an additional monitoring operation of 'other search space sets and/or other DCI formats'. This operation may be referred to as (Method 100). (Method 100) will be described in exemplary embodiments below.

According to a first exemplary embodiment, the terminal may additionally perform a monitoring operation of a fallback DCI for the PCell in a CSS set of the PCell. For example, for PCell scheduling (e.g., reception of scheduling information), the terminal may monitor a fallback DCI in a CSS set of the PCell and monitor a non-fallback DCI in a USS set of the SCell. Both the monitoring operation in the PCell and the monitoring operation in the SCell may be performed within a reference time.

According to a second exemplary embodiment, the terminal may additionally perform a monitoring operation of a fallback DCI for the PCell in a CSS set of the PCell and/or a USS set of the SCell. For example, for PCell scheduling (e.g., reception of scheduling information), the terminal may monitor a fallback DCI in a CSS set of the PCell and/or a USS set of the SCell, and monitor a non-fallback DCI in a USS set of the SCell. In the second exemplary embodiment, some monitoring operations (e.g., monitoring operation of a fallback DCI in a CSS set of the PCell, monitoring operation of a fallback DCI in a USS set of the SCell) may or may not be performed according to configuration by the base station. For example, according to configuration by the base station, the second exemplary embodiment may include the first exemplary embodiment.

According to a third exemplary embodiment, the terminal may additionally perform a monitoring operation of a fallback DCI for the PCell in a CSS set of the PCell, a USS set of the PCell, and/or a USS set of the SCell, and may additionally perform a monitoring operation of a non-fallback DCI for the PCell in a USS set of the PCell. For example, in order to receive scheduling information of the PCell, the terminal may perform a monitoring operation of a fallback DCI in a CSS set of the PCell, a USS set of the PCell, and/or a USS set of the SCell, and may perform a monitoring operation of a non-fallback DCI in a USS set of the SCell and/or a USS set of the PCell. In the third exemplary embodiment, some monitoring operations (e.g., monitoring operation of a fallback DCI in a CSS set of the PCell, monitoring operation of a fallback DCI in a USS set of the PCell, monitoring operation of a fallback DCI in a USS set of the SCell, monitoring operation of a non-fallback DCI in a USS set of the PCell) may or may not be performed according to configuration by the base station and/or definition of the technical specification.

For example, in order to receive scheduling information of the PCell, the terminal may not perform a monitoring operation of a fallback DCI in a USS set of the SCell, may perform a monitoring operation of a fallback DCI in a CSS set of the PCell and/or a USS set of the PCell, and may perform a monitoring operation of a non-fallback DCI in a USS set of the SCell and/or a USS set of the PCell. For another example, in order to receive scheduling information of the PCell, the terminal may not perform a monitoring operation of a fallback DCI in a USS set of the SCell, may not perform a monitoring of a fallback DCI in a USS set of the PCell, may perform a monitoring operation of a fallback DCI in a CSS set of the PCell, and may perform a monitoring operation of a non-fallback DCI in a USS set of the SCell and/or a USS set of the PCell. For another example, according to configuration by the base station, the third exemplary embodiment may include the first exemplary embodiment or the second exemplary embodiment.

According to a fourth exemplary embodiment, the terminal may additionally perform a monitoring operation of a fallback DCI for the PCell in a CSS set of the SCell. For example, in order to receive scheduling information of the PCell, the terminal may perform a monitoring operation of a fallback DCI in a CSS set of the SCell, and may perform a monitoring operation of a non-fallback DCI in a USS set of the SCell. The CSS set of the SCell may be a specific type of CSS set (e.g., type 3 CSS set). The fourth exemplary embodiment may be implemented in combination with the above-described exemplary embodiment(s). For example, the fourth exemplary embodiment may be combined with the first exemplary embodiment. In this case, in order to receive scheduling information of the PCell, the terminal may perform a monitoring operation of a fallback DCI in a CSS set of the PCell and/or a CSS set of the SCell, and may perform a monitoring operation of a non-fallback DCI in a USS set of the SCell.

According to the above-described exemplary embodiments, in order to receive scheduling information of the PCell, the terminal may perform a PDCCH monitoring operation in both the PCell and the SCell. That is, a self-scheduling scheme (e.g., a scheme of self-scheduling by the PCell) and a cross-carrier scheduling scheme (e.g., a scheme of cross-carrier scheduling by the SCell) may be simultaneously applied to one serving cell (e.g., PCell). In addition, both the monitoring operation in the PCell and the monitoring operation in the SCell may be performed (or together) within the same reference time. For scheduling for one serving cell (e.g., PCell), both a fallback DCI and a non-fallback DCI may be monitored. Therefore, even when an RRC reconfiguration procedure of the corresponding serving cell (e.g., PCell) is performed and/or when a link quality of the serving cell in which a DCI is monitored is deteriorated, scheduling for the corresponding serving cell (e.g., PCell) may be performed. According to some exemplary embodiment(s) described above, a fallback DCI may be selectively transmitted in a CSS set and a USS set. According to some exemplary embodiment(s) described above, the terminal may monitor a non-fallback DCI in a plurality of serving cells (e.g., PCell and SCell) in order to receive scheduling information for a certain serving cell (e.g., PCell). Accordingly, even when a link quality of a serving cell in which a DCI is monitored is deteriorated, scheduling by a non-fallback DCI may be performed through another serving cell.

In exemplary embodiments, cross-carrier scheduling from the SCell to the PCell will be mainly considered, but this may only be an example for a specific scenario (e.g., dynamic spectrum sharing scenario). The PCell and/or SCell may be interpreted as an arbitrary serving cell configured to the terminal. In exemplary embodiments, the PCell that is a scheduled cell may be interpreted as a first serving cell, and the SCell that is a scheduling cell may be interpreted as a second serving cell. Each of the first serving cell and the second serving cell may be a PCell, an SCell, or a PSCell. The PSCell may be used when dual connectivity technology is applied to the terminal. The exemplary embodiments may be used for cross-carrier scheduling within a primary cell group or a secondary cell group. When the exemplary embodiments are used for cross-carrier scheduling within a secondary cell group, a PCell may correspond to a PSCell. In exemplary embodiments, two serving cells will be primarily considered, but the exemplary embodiments may be extended for three or more cells. For example, the exemplary embodiments may be easily extended to a case in which the terminal monitors a scheduling DCI for a certain serving cell in three or more serving cells. In this case, one serving cell among the three or more serving cells may be a cell to which the scheduling DCI is applied. For example, one serving cell among the three or more serving cells may be a PCell, and the remaining two or more serving cells may be SCells.

### [DCI size alignment]

The payload size of each DCI (or DCI format) monitored by the terminal may be determined based on a serving cell or (active) bandwidth part to which the DCI is applied. For example, the size of the DCI may be determined by configuration value(s) of configuration parameter(s) associated with fields of the DCI among configuration parameters related to the serving cell or (active) bandwidth part to which the DCI is applied. When cross-carrier scheduling is used, the size of the DCI may be determined based on a scheduled cell (or active bandwidth part of the scheduled cell). For example, in the above-described exemplary embodiments, the size of the DCI for the PCell may be determined by configuration value(s) of configuration parameter(s) for the PCell or the active bandwidth part of the PCell.

For each serving cell, the maximum number of payload sizes of DCI (or DCI format) that the terminal can monitor may be limited. For example, the terminal may perform PDCCH monitoring for up to X different DCI sizes for each serving cell. X may be a natural number. For a DCI having a CRC scrambled by C-RNTI (or CS-RNTI, MCS-C-RNTI), the terminal may perform PDCCH monitoring for up to Y different DCI sizes. Y may be a natural number less than or equal to X.

The upper limit values of the number of DCI sizes, X and Y, may be predefined in the technical specification or may be configured to the terminal by the base station. In an exemplary embodiment, X may be 4 and Y may be 3. When the total number of different sizes of DCI format(s) configured to be monitored for each serving cell exceeds X or Y, the terminal may perform a procedure of aligning different DCI sizes until the total number of DCI sizes does not exceed X or Y.

Meanwhile, the above-described limitation on the number of payload sizes of DCI (or DCI format) may be applied for each reference time. For example, the terminal may perform PDCCH monitoring for up to X different DCI sizes for each serving cell for each reference time. X may be a natural number. For a DCI having a CRC scrambled by C-RNTI (or CS-RNTI, MCS-C-RNTI), the terminal may perform PDCCH monitoring for up to Y different DCI sizes for each reference time. Y may be a natural number less than or equal to X. In this case, X and Y, which are upper limit values of the number of DCI sizes, may be predefined in the technical specification or configured to the terminal by the base station. In an exemplary embodiment, X may be 4 and Y may be 3. When the total number of different sizes of DCI format(s) configured to be monitored for a certain reference time in each serving cell exceeds X or Y, the terminal may perform a procedure of aligning different DCI sizes until the total number of DCI sizes for the reference time does not exceed X or Y. That is, the DCI size alignment procedure may be performed for each reference time. The method described above may be referred to as (Method 110).

In (Method 110), the above-described reference time may be one slot. Alternatively, the reference time may be a time unit smaller than one slot (e.g., Z1 symbol(s)). Alternatively, the reference time may be Z2 consecutive slots. Z2 may be a natural number. Z1 and/or Z2 may be predefined in the technical specification or configured to the terminal by the base station. The value of Z1 and/or Z2 (or a range of Z1 and/or Z2 values) applied to the reference time may be determined based on a numerology (e.g., subcarrier spacing and/or CP type) used in an operating frequency band (e.g., frequency band to which a carrier belongs), the corresponding carrier, or a corresponding bandwidth part. One slot used as the reference time may be a slot according to a numerology of a scheduled cell (or an (active) bandwidth part corresponding to the scheduled cell). Alternatively, one slot used as the reference time may be a slot according to a numerology of one scheduling cell (or (active) bandwidth part corresponding to the one scheduling cell) among a plurality of scheduling cells. For example, the one scheduling cell among the plurality of scheduling cells may be a cell in which a bandwidth part (e.g., active bandwidth part) having the smallest (or largest) subcarrier spacing is located. The bandwidth parts of the scheduling cells may be switched, and accordingly, the one cell, which is the reference for determining the numerology, may be dynamically changed. For example, when cross-carrier scheduling from the SCell to the PCell is used, the terminal may count the number of DCI sizes in an interval corresponding to each slot of the PCell in a period, and may count the number of DCI sizes in an interval corresponding to each slot of the SCell in another period. The above-described (active) bandwidth part may be a downlink bandwidth part or an uplink bandwidth part. Alternatively, the above-described (active) bandwidth part may be a bandwidth part having a subcarrier spacing that is not larger (or smaller) among the downlink bandwidth part and the uplink bandwidth part.

When the terminal performs PDCCH monitoring in the plurality of scheduling cells (e.g., PCell and SCell) for scheduling of the scheduled cell (e.g., PCell) according to the above-described exemplary embodiments, methods for determining the size of DCI format(s) be monitored in the scheduling cells will be described below.

First, the terminal may determine the size of DCI format(s) to be monitored in one or more scheduling cells (e.g., PCell and SCell) for the PCell. Then, the terminal may count the total number of DCI sizes to be monitored in the one or more scheduling cells. Alternatively, by (Method 110), the terminal may count the total number of DCI sizes to be monitored in the one or more scheduling cells for each reference time. Finally, when the total number of DCI sizes exceeds a capability, the terminal may perform a procedure for reducing the number of DCI sizes by aligning the DCI sizes. This operation may be performed for each scheduled cell (or, scheduling cell(s) corresponding to the scheduled cell) or each reference time of each scheduled cell (or, scheduling cell(s) corresponding to the scheduled cell). The above-described procedure may consist of a plurality of steps. The aligning of DCI sizes may refer to aligning the DCI sizes to be the same.

In a first step, the terminal may determine sizes of an uplink fallback DCI format (e.g., DCI format 0_0) and a downlink fallback DCI format (e.g., DCI format 1_0) in a CSS set. When the determined sizes of the fallback DCI formats are different from each other, the terminal may match the sizes of the uplink and downlink fallback DCI formats with each other in a CSS set by aligning the size of one DCI format (e.g., uplink fallback DCI format) with the size of another DCI format (e.g., downlink fallback DCI format). In the CSS set, the matched size of the uplink and downlink fallback DCI formats may be referred to as a first size. In this case, the CSS set may be a CSS set of the PCell and/or a CSS set of the SCell. When the terminal monitors a fallback DCI format in both a CSS set of the PCell and a CSS set of the SCell, the size of the fallback DCI format monitored in the CSS set of the PCell may be the same as the size of the same fallback DCI format monitored in the CSS set of the SCell. That is, the sizes of the fallback DCI formats that the terminal monitors in a CSS set for the PCell may all be the same. When the sizes of the fallback DCI formats that the terminal monitors in a CSS set for the PCell are different from each other, a predetermined bit string (e.g., a bit string comprising `0's or zero padding) may be inserted in a DCI format of one cell so that the fallback DCI formats have the same size. Alternatively, a fallback DCI format may be monitored in only one search space set among a CSS set of the PCell and a CSS set of the SCell in each reference time (e.g., each slot), and this operation may be configured to the terminal. In this case, the size of the fallback DCI format monitored in a CSS set of the PCell and the size of the same fallback DCI format monitored in a CSS set of the SCell may generally be different from each other. Alternatively, the size of the fallback DCI format monitored in a CSS set of the PCell may be the same as the size of the same fallback DCI format monitored in a CSS set of the SCell.

In a second step, the terminal may determine sizes of an uplink fallback DCI format (e.g., DCI format 0_0) and a downlink fallback DCI format (e.g., DCI format 1_0) of a USS set. When the determined sizes of the fallback DCI formats are different, the terminal may match the size of the uplink fallback DCI format to the size of the downlink fallback DCI format in a USS set by aligning the size of one DCI format with the size of another DCI format. The matched size in the USS set may be referred to as a second size. In this case, the USS set may be a USS set of the PCell and/or a USS set of the SCell. The size of the fallback DCI format monitored in a USS set of the PCell may be the same as the size of the same fallback DCI format monitored in a USS set of the SCell. That is, the sizes of the fallback DCI formats that the terminal monitors in a USS set for the PCell may all be the same. When the sizes of the fallback DCI formats that the terminal monitors in a USS set for the PCell are different, a predetermined bit string (e.g., bit string comprising '0's, zero padding) may be inserted in one DCI format so that the fallback DCI formats have the same size. Alternatively, a fallback DCI format may be monitored in only one search space set among a USS set of the PCell and a USS set of the SCell within each reference time (e.g., each slot), and this operation may be configured to the terminal. In this case, the size of the fallback DCI format monitored in a USS set of the PCell may be generally different from the size of the same fallback DCI format monitored in a USS set of the SCell. Alternatively, the size of the fallback DCI format monitored in a USS set of the PCell may be different from the size of the same fallback DCI format monitored in a USS set of the SCell.

In a third step, the terminal may determine sizes of an uplink non-fallback DCI format (e.g., DCI format 0_1) and a downlink non-fallback DCI format (e.g., DCI format 1_1) of a USS set. In this case, the size of the uplink non-fallback DCI format and/or the downlink non-fallback DCI format in a USS set may coincide with the second size. When the size of the uplink non-fallback DCI format and/or the downlink non-fallback DCI format in a USS set matches the second size, the terminal may append a predetermined bit string (e.g., one bit having a zero value, or a zero bit string having one or more bits) to a payload of the uplink non-fallback DCI format and/or the downlink non-fallback DCI format in the USS set so that the size of the corresponding non-fallback DCI format is differentiated from the second size. The method of allowing the size of the non-fallback DCI format to be distinguished from the second size may be applied according to a predetermined condition. For example, when additionally satisfying a condition that a cell to which the USS set in which the non-fallback DCI format is monitored belongs matches a cell to which the USS set in which the fallback DCI format is monitored belongs (e.g., when both the cell to which the USS set in which the non-fallback DCI format is monitored belongs and the cell to which the USS set in which the fallback DCI format is monitored belongs are the PCell), a predetermined bit string may be added to the payload of the non-fallback DCI format, and the size of the non-fallback DCI format may be distinguished from the size of the fallback DCI format. On the other hand, if the cell to which the USS set in which the non-fallback DCI format is monitored belongs does not match the cell to which the USS set in which the fallback DCI format is monitored belongs (e.g., when the cell to which the USS set in which the non-fallback DCI format is monitored belongs is the SCell, and the cell to which the USS set in which the fallback DCI format is monitored belongs is the PCell), the above-described method may not be applied. Accordingly, the size of the non-fallback DCI format may match the size of the fallback DCI format. For example, when the terminal monitors the fallback DCI format in a CSS set of the PCell and monitors the non-fallback DCI format in a USS set of the PCell and a USS set of the SCell, the above-described bit string padding method may be applied only to the non-fallback DCI format monitored in a USS set of the PCell. Alternatively, in the above-described case, the bit string padding method may be applied to both the non-fallback DCI format monitored in a USS set of the PCell and the non-fallback DCI format monitored in a USS set of the SCell. In this case, the size of the non-fallback DCI format monitored in a USS set of the PCell may match the size of the non-fallback DCI format monitored in a USS set of the SCell. The size of the uplink non-fallback DCI format of a USS set determined in the third step may be referred to as a third-first size, and the size of the downlink non-fallback DCI format of a USS set determined in the third step may be referred to as a third-second size. The third-first size may be the same as the third-second size. Alternatively, the third-first size may be different from the third-second size.

In a fourth step, the terminal may determine sizes of an uplink non-fallback DCI format (e.g., DCI format 0_2) and a downlink non-fallback DCI format (e.g., DCI format 1_2) of a USS set. In this case, the size of the uplink non-fallback DCI format and/or the downlink non-fallback DCI format in a USS set may coincide with the second size. When the size of the uplink non-fallback DCI format and/or the downlink non-fallback DCI format in a USS set matches the second size, the terminal may add a predetermined bit string (e.g., one bit having a value of 0 or a zero bit string comprising one or more bits) to the payload of the uplink non-fallback DCI format and/or the downlink non-fallback DCI format of the USS set so that the size of the corresponding non-fallback DCI format is differentiated from the second size. The method of allowing the size of the non-fallback DCI format to be distinguished from the second size may be applied according to the above-described predetermined condition. As another method for allowing the size of the non-fallback DCI format of a USS set to be distinguished from the second size, the base station may determine configuration parameters related to the size of the DCI format as appropriate values so that the size of the non-fallback DCI format (e.g., DCI format 0_2, 1_2, 0_1, or 1_1) is differentiated from the second size, and transmit the determined configuration parameters to the terminal. The terminal may not expect that the size of the non-fallback DCI format is equal to the second size in a USS set. The method for allowing the size of the non-fallback DCI format to be distinguished from the second size in a USS set may be applied according to the above-described predetermined condition. The size of the uplink non-fallback DCI format of a USS set determined in the fourth step may be referred to as a fourth-first size, and the size of the downlink non-fallback DCI format of a USS set determined in the fourth step may be referred to as a fourth-second size. The fourth-first size may be the same as the fourth-second size. Alternatively, the fourth-first size may be different from the fourth-second size.

The payload sizes (e.g., third-first size, third-second size, fourth-first size, or fourth-second size) of the non-fallback DCI format that the terminal monitors in USS sets of a plurality of serving cells may be determined to be different sizes. For example, whether a specific field(s) is included in the DCI format may be different for each serving cell in which the DCI format is transmitted. That is, when the PCell is scheduled by the same DCI format, the DCI format transmitted in the PCell (e.g., USS set of the PCell) may include specific field(s), and the DCI format transmitted in the SCell (e.g., USS set of the SCell) may not include the specific field(s) described above. Alternatively, the DCI format transmitted in the PCell (e.g., USS set of the PCell) may not include specific field(s), and the DCI format transmitted in the SCell (e.g., USS set of the SCell) may include the specific field(s) described above.

The specific field(s) described above may be field(s) related to the scheduling cell. That is, the presence or absence of the specific field(s) in the DCI, the size of the DCI, the interpretation method, and/or related operations of the terminal may be determined based on the type of the cell in which the DCI is transmitted and/or a relationship between the cell in which the DCI is transmitted and the scheduled cell (e.g., whether the scheduling cell is the same as the scheduled cell).

According to an exemplary embodiment, the specific field may be a carrier indicator field (CIF). When the same DCI format is used for scheduling of the PCell, a DCI format transmitted in the PCell (e.g., USS set of the PCell) may not include a CIF, and the same DCI format transmitted in the SCell (e.g., USS set of the SCell) may include a CIF. In this case, due to the difference in whether a CIF is included, the payload size of the DCI format monitored in the PCell may be different from the payload size of the same DCI format monitored in the SCell. For example, the difference between the payload sizes of the DCI format may be the number of bits of the CIF (e.g., up to 3 bits). Accordingly, each of the non-fallback DCI formats (e.g., DCI formats 0_1, 1_1, 0_2, 1_2) monitored in a USS set may have a plurality of (e.g., up to two) sizes. In this case, the bit string insertion for differentiation from the second size may be applied to the DCI format having the same payload size as the second size.

When the DCI format monitored in the same type of search space set (e.g., USS set, CSS set) for the same cell has different payload sizes for a plurality of serving cells, the total number of DCI sizes to be monitored by the terminal may be increased. This may cause PDCCH configuration restriction and/or PDCCH capacity reduction. As a method for solving the above-mentioned problem, even when the DCI format (e.g., non-fallback DCI format, DCI format 0_1, 1_1, 0_2, or 1_2) monitored in the same type of search space set (e.g., USS set) for the same cell (e.g., the same scheduled cell) has different payload sizes for a plurality of serving cells (e.g., a plurality of scheduling cells), the DCI format may be considered as having one DCI size, and the number of DCI sizes may be counted according to the considered size.

As another method, a method of aligning the payload size in one serving cell to the payload size in another serving cell may be considered in the above-described case. For example, the terminal may align the payload size of the DCI format monitored in the PCell (e.g., USS set of the PCell) and the payload size of the DCI format monitored in the SCell (e.g., USS set of SCell) with each other. As a method for this, a method of aligning the size of a DCI format for one scheduling cell with the size of the DCI format for another scheduling cell by adding a predetermined bit string (e.g., bit string comprising '0's) to the DCI format for the one scheduling cell may be considered. In the above-described exemplary embodiment, when the DCI format is transmitted in the PCell (e.g., USS set of the PCell), a predetermined bit string (e.g., bit string comprising '0's) having an appropriate length (e.g., the same length as the CIF of the SCell) may be added to the payload of the DCI format, and the size of the corresponding DCI format may be aligned with the size of the DCI format monitored in the SCell (e.g., USS set of the SCell). The predetermined bit string may be inserted in the last part of the payload of the DCI format (e.g., inserted as least significant bit(s) (LSB(s)) of the payload) or inserted in the first part of the payload (e.g., inserted as most significant bit(s) (MSB(s)) of the payload. Alternatively, the position at which the predetermined bit string is inserted into the DCI format may be the same as the position of the CIF of the same DCI format monitored in the SCell (e.g., USS set of the SCell).

Alternatively, the field composition and the sizes of the fields of DCI formats for a plurality of scheduling cells may be the same. In the above-described exemplary embodiment, even when the DCI format is transmitted not only in the SCell (e.g., USS set of the PSCell) but also in the PCell (e.g., USS set of the PCell), the DCI format may include a CIF (or a field or bit string corresponding to the CIF). The length of the CIF and/or the position thereof in the payload may be the same for the PCell (e.g., USS set of the PCell) and the SCell (e.g., USS set of the SCell). A serving cell corresponding to each field value (e.g., codepoint) of the CIF may also be the same for the PCell and the SCell. In this case, the CIF of the DCI format transmitted in the PCell (e.g., USS set of the PCell) may always indicate the PCell itself as the scheduled cell. The terminal may expect that the CIF value of the DCI format transmitted in the PCell (e.g., USS set of the PCell) always corresponds to the ID of the PCell. Alternatively, the terminal may regard the serving cell scheduled by the DCI format as the PCell regardless of the serving cell indicated by the CIF value of the DCI format transmitted in the PCell (e.g., USS set of the PCell).

In a fifth step, the terminal may compare the total number of sizes of DCI formats determined in the above steps with the upper limit value (e.g., X and/or Y) of DCI sizes. The DCI formats may be DCI formats for C-RNTI (or CS-RNTI, MCS-C-RNTI), in which case the upper limit value Y may be applied. When the total number of DCI sizes determined according to the above-described procedure does not exceed the upper limit value, the DCI size determination procedure may be terminated. The terminal may assume the DCI size determined according to the above-described procedure, and may perform blind decoding and reception operations on the DCI formats. On the other hand, when the total number of DCI sizes determined according to the above-described procedure exceeds the upper limit value, the terminal may additionally perform the DCI size alignment procedure, and may change the payload size(s) of some DCI format(s). The additional DCI size alignment procedure may include a sixth step, a seventh step, an eighth step, and the like to be described later.

In the fifth step, the PDCCH monitoring capability of the terminal may be defined based on a scheduled cell (e.g., PCell). For example, the terminal may consider a sum of all DCI sizes in all scheduling cells corresponding to the scheduled cell (e.g., PCell) as the total number of DCI sizes for the scheduled cell (e.g., PCell), and compare the considered total number with the upper limit value (e.g., X and/or Y) of the number of DCI sizes. In this case, the upper limit value may be defined as a single value corresponding to the scheduled cell. Alternatively, the PDCCH monitoring capability of the terminal may be defined for each of a plurality of scheduling cells or cell groups. For example, the terminal may count the total number of DCI sizes for each of the PCell and SCell, which are scheduling cells, and may compare the total number of DCI sizes with the upper limit value. In this case, the upper limit value may be defined as a value corresponding to each scheduling cell or cell group. The upper limit value for each scheduling cell or cell group may be predefined in the technical specification. Alternatively, the upper limit value for each scheduling cell or cell group may be configured by the base station to the terminal. When the total number of DCI sizes in one serving cell exceeds the upper limit value, the terminal may perform the DCI size alignment procedure. In this case, the DCI size alignment procedure may be performed for the corresponding cell.

In the sixth step, the terminal determines the size (e.g., second size) of the uplink fallback DCI format (e.g., DCI format 0_0) of a USS set with the size (e.g., first size) of the uplink fallback DCI format (e.g., DCI format 0_0) of a CSS set, and may align the size (e.g., second size) of the downlink fallback DCI format (e.g., DCI format 1_0) of the USS set with the size (e.g., first size) of the downlink fallback DCI format (e.g., DCI format 1_0) of the CSS set. Even when the sixth step is completed, if the total number of DCI sizes exceeds the upper limit value, the seventh step may be performed.

In the seventh step, the terminal may align the sizes of the non-fallback DCI formats (e.g., DCI formats 0_2 and 1_2) of a USS set with each other. The above-described procedure may include a procedure for aligning the sizes of the uplink non-fallback DCI format (e.g., DCI format 0_2) and downlink non-fallback DCI format (e.g., DCI format 1_2) with each other. When the same non-fallback DCI format has different payload sizes for different monitoring cells, the seventh step may include a procedure for aligning the different payload sizes. Even when the seventh step is completed, if the total number of DCI sizes exceeds the upper limit value, the eighth step may be performed.

In the eighth step, the terminal may align the sizes of non-fallback DCI formats (e.g., DCI formats 0_1 and 1_1) of a USS set with each other. The above-described procedure may include a procedure for aligning the sizes of the uplink non-fallback DCI format (e.g., DCI format 0_1) and the downlink non-fallback DCI format (e.g., DCI format 1_1) with each other. When the same non-fallback DCI format has different payload sizes for different monitoring cells, the eighth step may include a procedure for aligning the different payload sizes.

Some of the steps described above may be omitted. For example, the terminal may not perform step(s) irrelevant to DCI format(s) that the base station configured to monitor. For example, when monitoring of DCI formats 0_2 and 1_2 is not configured to the terminal, the terminal may omit the fourth and seventh steps. The order of some step(s) may be changed. In addition, new step(s) may be added to the steps described above. For example, when monitoring of a DCI format other than the above-described DCI formats is configured to the terminal, the terminal may perform a step of determining the payload size of the corresponding DCI format (e.g., another DCI format) and/or a step of aligning the payload size of the corresponding DCI format. When a serving cell includes a plurality of uplink carriers (e.g., one uplink carrier and one supplementary uplink carrier), and a certain DCI format is determined to have different sizes for the plurality of uplink carriers, the terminal may perform a procedure of aligning the size of the DCI format in one carrier with the size of the DCI format of another carrier so that the DCI format (e.g., the certain DCI format) have the same size for the plurality of uplink carriers.

In the above-described method, the DCI size alignment may be applied within one scheduling cell. Alternatively, the DCI size alignment may be applied between a plurality of scheduling cells. Aligning the sizes of DCI formats monitored within one serving cell may be helpful for reducing a PDCCH reception complexity. For example, when PDCCH candidates belonging to different search space sets (e.g., overlapping search space sets) within the same cell have the same DCI size, the corresponding PDCCH candidates are mapped to the same set of CCE(s), and the same scrambling is applied to the corresponding PDCCH candidates, the terminal may perform blind decoding only once to monitor the PDCCH candidates. Accordingly, the number of times of performing the PDCCH blind decoding may be counted only once, and the PDCCH monitoring complexity may be reduced. On the other hand, aligning the sizes of DCI formats monitored in different serving cells may not be helpful for reducing the PDCCH reception complexity. In general, since a plurality of serving cells are arranged in different frequency regions, PDCCH candidates monitored in different serving cells may not have the same set of CCE(s). Therefore, even when the DCI sizes are the same, it may be difficult to detect the DCI through one blind decoding. In this case, the number of times of performing the PDCCH blind decoding may be counted, respectively.

Therefore, in the above-described method, when DCI formats are monitored in the same serving cell, the terminal may perform an operation of aligning (e.g., matching) the sizes of the DCI formats with each other, and when DCI formats are monitored in different serving cells, the terminal may not perform an operation of aligning (e.g., matching) the sizes of the DCI formats with each other. For example, according to the second exemplary embodiment for (Method 100), a fallback DCI format (e.g., DCI formats 0_0 and 1_0) of a CSS set may be monitored only in the PCell, and a fallback DCI format (e.g., DCI formats 0_0 and 1_0) of a USS set may be monitored only in the SCell. In this case, the terminal may omit the fifth step. For another example, according to the third exemplary embodiment for (Method 100), a fallback DCI format (e.g., DCI formats 0_0 and 1_0) of a CSS set may be monitored only in the PCell, and a fallback DCI format (e.g., DCI formats 0_0 and 1_0) of a USS set may be monitored in at least one of the SCell and the PCell (according to configuration by the base station). In this case, the terminal may perform the fifth step with respect to a fallback DCI format (e.g., DCI formats 0_0 and 1_0) in a USS set of the PCell, and may omit the fifth step with respect to a fallback DCI format (e.g., DCI formats 0_0 and 1_0) in a USS set of the SCell. Alternatively, in the above-described case, the terminal may perform the fifth step with respect to the fallback DCI formats in a USS set of the PCell and a USS set of the SCell.

If some step(s) of the DCI size alignment procedure are omitted, the total number of DCI sizes may increase, and the PDCCH transmission capacity of the PCell may be limited. Accordingly, a method for maintaining or increasing the PDCCH transmission capacity of the PCell may be used simultaneously or separately from the above-described method. A first method may be a method of increasing the upper limit value of the number of DCI sizes. For example, when the above-described scheduling method is used, the upper limit value of the number of DCI sizes for the scheduled cell (e.g., PCell) may be increased by K. K may be a natural number. Specifically, the upper limit value for the total number of DCI sizes for a plurality of scheduling cells may be increased by K. Alternatively, the upper limit values of the total number of DCI sizes for the respective scheduling cells may be increased by K1 and K2. K1 may be different from K2. Alternatively, K1 may coincide with K2.

A second method may be a method of increasing an upper limit value of the number of PDCCH blind decodings that the terminal can perform within a reference time and/or the number of CCEs that the terminal can receive within the reference time. The upper limit value of a sum of the number of times of performing PDCCH blind decoding for a plurality of scheduling cells and/or the number of CCEs that can be received may increase. Alternatively, the upper limit value of the number of times of performing PDCCH blind decoding and/or the number of CCEs that can be received for each scheduling cell may be predefined or configured to the terminal by the base station. The upper limit value for at least one scheduling cell may increase.

The value of K (or value of K1, value of K2) or the increment of the upper limit value for the number of times of performing PDCCH blind decoding and/or the number of CCEs that can be received may be defined as a capability of the terminal, and the terminal may report to the base station value(s) of K (or value(s) of K1, value(s) of K2) supported by the terminal or the increment(s) of the upper limit value for the number of times of performing PDCCH blind decoding and/or the number of CCEs that can be received. The above-described method may be applied only to some terminals having the capability.

A third method may be a method of partially changing a condition for counting the number of times of performing PDCCH blind decoding and/or the number of CCEs. Here, the CCEs may be CCEs that can be received. For example, even when PDCCH candidates (e.g., a fallback DCI format in a CSS set of the PCell and/or a non-fallback DCI format in a USS set of the SCell) monitored in different serving cells are not processed through a single PDCCH blind decoding, if a predetermined condition is satisfied, the terminal may count a plurality of PDCCH blind decodings as one PDCCH blind decoding. The above-mentioned predetermined condition may include at least one of a condition in which the sizes of DCI formats are the same and a condition in which the same scrambling is applied to the DCI formats. The predetermined condition may not include a condition in which the PDCCH candidates are mapped to the same set of CCEs. The third method may be defined based on the capability of the terminal, and may be applied only to some terminals.

According to the above-described exemplary embodiment (e.g., the second or third exemplary embodiment of (Method 100)), the terminal may monitor a fallback DCI format for the PCell in a USS set of the SCell. On the other hand, the terminal may monitor a fallback DCI format for the SCell in a USS set of the SCell. If a fallback DCI format for the PCell and a fallback DCI for the SCell are monitored in a USS set of the SCell at the same time, it may be difficult for the terminal to distinguish whether a received fallback DCI format is for the PCell or the SCell. In order to solve the above-mentioned problem, a CIF may be included in the fallback DCI format. The terminal may perform a reception operation or a transmission operation of a data channel (e.g., PDSCH, PUSCH) scheduled by the received fallback DCI format in a serving cell indicated by the CIF of the received fallback DCI format. Alternatively, only a fallback DCI format for one serving cell may be monitored in one serving cell (or a specific search space set of the serving cell, a specific type of search space set of the serving cell), and this operation may be configured to the terminal. For example, in the above-described exemplary embodiment, monitoring of a fallback DCI format for the SCell or a fallback DCI format for the PCell in the SCell (e.g., USS set of the SCell, CSS set of the SCell) may be configured to the terminal. The CIF corresponding to the SCell or PCell may be configured to the terminal through higher layer signaling (e.g., RRC signaling). According to the above-described method, the above-described ambiguity (e.g., ambiguity of the cell to which the fallback DCI format is applied) may be removed without increasing the payload of the fallback DCI format.

Meanwhile, a group common DCI (or group common PDCCH) for the PCell may be transmitted in a CSS set (e.g., type 3 CSS set) of the PCell. However, in the above-described dynamic spectrum sharing scenario, the PDCCH capacity of the PCell may be insufficient. Therefore, the PDCCH transmission may be offloaded from the PCell to the SCell, and a cross-carrier indication method for the group common DCI (e.g., SCell → PCell) may be considered to support this operation. When a DCI (e.g., group common DCI) received in a CSS set (e.g., type 3 CSS set) of the SCell includes control information applied to the PCell, the terminal may perform an operation of the PCell based on the control information. The above-described operation of the PCell may include an operation according to a slot format indication, a preemption operation, a power control operation, an uplink transmission cancellation operation, an operation according to a wake-up indication, an SCell dormancy operation, or the like. Also, the group common DCI may include DCI formats 2_0, 2_1, 2_2, 2_3, 2_4, 2_5, 2_6, and the like.

The terminal may monitor and receive a DCI including a transmit power control (TPC) command for PUCCH power control of the PCell in the SCell (e.g., type 3 CSS set of the SCell). The terminal may monitor and receive a DCI including control information indicating a wake-up operation of the PCell in the SCell (e.g., type 3 CSS set of the SCell).

### [Search space set mapping method]

For a serving cell (e.g., scheduled cell), the maximum number of times (hereinafter referred to as 'N_{BD}') of performing PDCCH blind decoding (BD) and the maximum number of CCEs (hereinafter referred to as 'N_{CCE}') that can be processed (e.g., channel-estimated) may defined for each reference time. The reference time may be each slot, each PDCCH monitoring span, or P consecutive slots. P may be a natural number. One or more PDCCH monitoring spans may be arranged within one slot. There may be a slot(s) in which PDCCH monitoring spans are not arranged. When cross-carrier scheduling is used, a slot or PDCCH monitoring span may refer to a slot or PDCCH monitoring span of a scheduling cell (or bandwidth part (e.g., active bandwidth part, one configured bandwidth part) of the scheduling cell). Each of N_{BD} and N_{CCE} may be determined by a numerology (e.g., subcarrier spacing) of the scheduling cell (or bandwidth part (e.g., active bandwidth part, one configured bandwidth part) of the scheduling cell).

According to the above-described method, the terminal may perform PDCCH monitoring in a plurality of scheduling cells for PDSCH/PUSCH scheduling for one scheduled cell. In this case, numerologies (e.g., subcarrier spacings and/or CP types) of the plurality of scheduling cells may be different from each other. For example, the terminal may monitor search spaces of the PCell and the SCell for scheduling for the PCell. In this case, a numerology of the PCell (or active bandwidth part of the PCell) may be referred to as a first numerology (or a first subcarrier spacing), and a numerology of the SCell (or active bandwidth part of the SCell) may be referred to as a second numerology (or second subcarrier spacing). In this case, BD and CCE counting for the PCell may be performed based on a reference numerology or one scheduling cell (or active bandwidth part thereof) corresponding to the reference numerology. Parameters for the BD and CCE counting for the PCell (e.g., a time unit such as a slot or PDCCH monitoring span, N_{BD}, N_{CCE}, or the like) may be determined based on the reference numerology or one scheduling cell (or active bandwidth part thereof) corresponding to the reference neurology.

The reference numerology may be a numerology having a smaller (or larger) subcarrier spacing among the first numerology and the second numerology. Alternatively, the base station may configure one of the first numerology and the second numerology as the reference numerology, and may inform the terminal of information on the reference numerology. The terminal may identify the reference numerology based on the information received from the base station. Alternatively, the reference numerology may be a numerology having the smallest (or largest) subcarrier spacing among numerologies corresponding to all bandwidth parts configured for scheduling cells. Alternatively, the reference numerology may be a numerology having the smallest (or largest) subcarrier spacing among numerologies corresponding to all bandwidth parts configured in one cell among scheduling cells. Alternatively, the terminal may receive information on the reference numerology from the base station, and the reference numerology may coincide with one of numerologies used in bandwidth parts configured for scheduling cells. In this case, the reference numerology may not match a numerology used in the bandwidth parts activated in the scheduling cells. The reference numerology may mean a reference subcarrier spacing. According to the above-described method, an integer number of slot(s) may be included in each reference time for each scheduled cell.

The terminal may sequentially perform mapping of search space sets (e.g., PDCCH candidates belonging to the search space sets) configured within the reference time while the total number of PDCCH candidates and the total number of CCEs do not exceed N_{BD} and N_{CCE} for each reference time described above. The terminal may perform a blind decoding operation only on PDCCH candidates belonging to the mapped search space set, and may omit a blind decoding operation on PDCCH candidates belonging to an unmapped search space set. In this case, the terminal may map USS set(s) after preferentially mapping CSS set(s). The terminal may not expect that the CSS set(s) are not mapped. For example, all PDCCH candidates belonging to the CSS set(s) may always be monitored by the terminal. In addition, the search space sets (e.g., USS sets) may be sequentially mapped based on the IDs of the search space sets (e.g., in ascending order of search space set IDs).

When the terminal performs PDCCH monitoring in a plurality of scheduling cells for PDSCH/PUSCH scheduling for one scheduled cell (e.g., PCell), N_{BD} and N_{CCE} may refer to an upper limit value of a summed number of PDCCH candidates and an upper limit value of a summed number of CCEs for search space sets monitored in the plurality of scheduling cells for scheduling of the PCell, respectively. In addition, the terminal may sequentially perform mapping of the search space sets (e.g., PDCCH candidates belonging to the search space sets) configured within the reference time until the total number of PDCCH candidates and the total number of CCEs for the plurality of scheduling cells do not exceed N_{BD} and N_{CCE} for each reference time described above.

The search space set configured in the terminal for PCell scheduling may be monitored in one scheduling cell among a plurality of scheduling cells according to configuration by the base station. For example, whether cross-carrier scheduling is applied to each search space set monitored for PCell scheduling may be configured to the terminal. If cross-carrier scheduling is not configured to be applied to a search space set monitored for PCell scheduling, the search space set may be monitored in the PCell, and may be mapped to a corresponding CORESET in the PCell (e.g., CORESET associated by a CORESET ID). On the other hand, when cross-carrier scheduling is configured to be applied to a search space set monitored for PCell scheduling, the search space set may be monitored in a scheduling cell (e.g., SCell) other than the PCell, and may be mapped to a corresponding CORESET in the scheduling cell (e.g., SCell) (e.g., CORESET associated by a CORESET ID). In this case, all search space sets to which cross-carrier scheduling is applied may be monitored in the same cell (e.g., one SCell).

The above-described mapping order of search space sets may be determined regardless of whether cross-carrier scheduling is applied to the search space set (e.g., monitored scheduling cell). For example, even when a plurality of scheduling cells exist, a search space set (e.g., USS set) having a lower (or higher) ID may be preferentially mapped as in the above-described method. Alternatively, the above-described mapping order (or whether to map) of search space sets may be determined by whether cross-carrier scheduling is applied to the search space set (e.g., monitored scheduling cell). For example, the mapping order (or whether to map) of search space sets (e.g., USS sets) may be determined by the ID of the search space set and the ID of the cell in which the search space set is monitored.

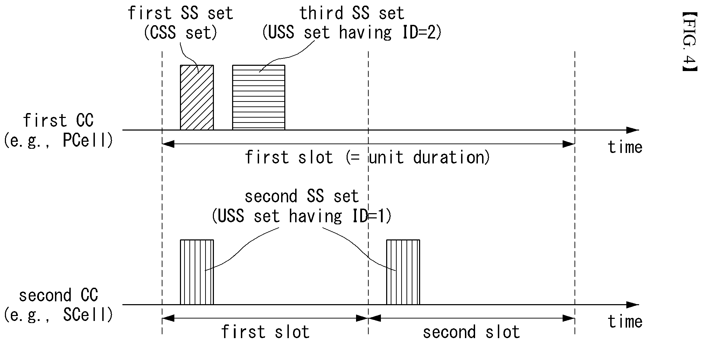

FIG. 4 is a conceptual diagram illustrating a method of mapping search space sets in cross-carrier scheduling according to (Method 100).

Referring to FIG. 4, a base station may configure a plurality of cells (e.g., a first component carrier (CC) and a second CC), and may transmit configuration information of the plurality of cells to a terminal. In addition, the base station may configure a search space set in each of the plurality of cells, and may transmit configuration information of the search space set to the terminal. The first carrier (e.g., first CC) and the second carrier (e.g., second CC) may be aggregated in the terminal. The terminal may monitor a DCI for scheduling a PDSCH or PUSCH of the first carrier in the first carrier and the second carrier. For example, the first carrier may be a PCell, and the second carrier may be an SCell. In this case, different numerologies may be used for the PCell and the SCell. For example, a subcarrier spacing (e.g., 15 kHz) applied to the PCell (or bandwidth part of the PCell) may be less than a subcarrier spacing (e.g., 30 kHz) applied to the SCell (or bandwidth part of the SCell), and one slot in the PCell may correspond to a plurality of slots (e.g., two slots) in the SCell. A first slot of the PCell may correspond to a first slot and a second slot of the SCell.

A numerology or subcarrier spacing (e.g., 15 kHz) of the PCell may be used as a reference numerology or reference subcarrier spacing. In this case, each slot, each span, etc. of the PCell may be regarded as a reference time for PDCCH mapping. A monitoring operation in a plurality of cells (e.g., search space sets in the plurality of cells) may be completed within a reference time. In an exemplary embodiment, the terminal may map PDCCH candidates of a search space set for PCell scheduling to the PCell and the SCell with respect to a duration corresponding to each slot of the PCell. In this case, the above-described method may be used. For example, the terminal may first map a first search space set (e.g., first SS set) that is a CSS set among search space sets for scheduling of the PCell configured in a corresponding slot. Then, the terminal may sequentially map USS sets (e.g., second SS set and third SS set) among the search space sets for PCell scheduling configured in the corresponding slot. In this case, the mapping order may be determined based on the search space set IDs of the USS sets. According to the above rule, under a condition of not exceeding N_{BD} and N_{CCE}, the terminal may preferentially map the second search space set (e.g., second SS set) of the SCell, which is a USS set having a smaller ID, and then may map the third search space set (e.g., third SS set) of the PCell, which is a USS set having a larger ID. The second search space set may include a plurality of (e.g., two) PDCCH monitoring occasions (e.g., CORESETs) within the corresponding reference time. The plurality of PDCCH monitoring occasions may all be mapped. Alternatively, none of the plurality of PDCCH monitoring occasions may be mapped.

Alternatively, the mapping order may be determined based on the search space set ID of the USS set and the ID of the cell (e.g., scheduling cell) to which the USS set is mapped. For example, the terminal may preferentially map a search space set mapped to the PCell (e.g., the same cell as the scheduled cell) than a search space set mapped to the SCell (e.g., cell for cross-carrier scheduling). Alternatively, the terminal may preferentially map the search space set mapped to the SCell (e.g., cell for cross-carrier scheduling) than the search space set mapped to the PCell (e.g., the same cell as the scheduled cell). Alternatively, one of the above-described two mapping rules may be configured by the base station to the terminal. The terminal may map the search space set(s) in the order of lower (or higher) search space set IDs with respect to the search space set(s) mapped to the same cell. According to the above rule, the terminal may first map the first search space set, which is a CSS set, may preferentially map the third search space set, which is a USS set, in the PCell, and then may map the second search space set, which is a USS set, in the SCell under the condition of not exceeding N_{BD} and N_{CCE}.

According to another exemplary embodiment, the search space sets may be configured to exist only in one cell among a plurality of scheduled cells for each reference time. For example, the search space sets may be configured only in the PCell within a first reference time (e.g., first slot), and may be configured only in the SCell within a second reference time (e.g., second slot). The terminal may map the search space sets by the method described above in one cell (e.g., scheduling cell) to which the search space sets are mapped for each reference time. The above-described method may be applied to all search space sets configured for scheduling of the PCell. Alternatively, the above-described method may be applied only to some of the search space sets (e.g., USS sets) configured for scheduling of the PCell. In this case, the CSS set mapped to the PCell and the USS set mapped to the SCell may be configured together within the same reference time.

Meanwhile, a bandwidth part activated in each serving cell may be switched. The terminal may receive information instructing to switch (or change) the bandwidth part from the base station. In this case, the terminal may switch the active bandwidth part from the current bandwidth part (hereinafter, referred to as `first bandwidth part') to another bandwidth part (hereinafter referred to as 'second bandwidth part'). A time when the terminal performs a transmission/reception operation in the second bandwidth part may be a specific time of a specific slot (e.g., the first symbol of the specific slot). The terminal may receive from the base station information indicating the specific slot in which the transmission/reception operation starts in the second bandwidth part. For example, the specific slot may be indicated by a DCI, and the terminal may regard a slot in which a PDSCH or PUSCH is scheduled (or the first slot among slots in which a PDSCH or PUSCH is scheduled) as the specific slot. That is, the specific slot may be a slot scheduled by the DCI.

In the exemplary embodiment shown in FIG. 4, when the bandwidth part of the PCell is switched, a start time of the transmission/reception operation in the switched second bandwidth part may be a specific time of a first slot (e.g., the first symbol of the first slot). When the bandwidth part of the SCell is switched, a start time of the transmission/reception operation in the switched second bandwidth part may be a specific time of a first slot or second slot (e.g., the first symbol of the first slot or the second slot). In the above-described exemplary embodiment, when the transmission/reception operation in the second bandwidth part of the SCell starts from the second slot, the bandwidth part switching of the SCell may occur within the first slot of the PCell, which is the reference time for mapping of the search space sets. That is, the terminal may perform a transmission/reception operation for the first bandwidth part in the first slot of the SCell belonging to the first slot of the PCell, and may perform a transmission/reception operation for the second bandwidth part in the second slot of the SCell belonging to the first slot of the PCell. Accordingly, the search space set configuration for the first bandwidth part may be applied to the first slot of the SCell, and the search space set configuration for the second bandwidth part may be applied to the second slot of the SCell. Accordingly, the search space set configuration may be changed within the reference time. In addition, when numerologies (e.g., subcarrier spacings) of the first bandwidth part and the second bandwidth part are different from each other, a problem may occur that each reference time does not include full slot(s) of the SCell. In the SCell, a certain slot may not be completely included within one reference time. That is, in the SCell, a certain slot may be included in a plurality of reference times. Alternatively, a slot boundary of the PCell and a slot boundary of the SCell may not be aligned. That is, a time in the PCell may deviate from a time in the SCell. The above-described problem will be explained in exemplary embodiments below.

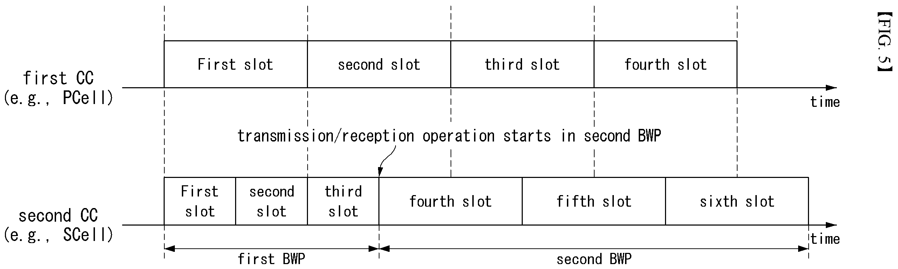

FIG. 5 is a conceptual diagram illustrating a method of switching a bandwidth part in cross-carrier scheduling according to (Method 100).

Referring to FIG. 5, a base station may configure a plurality of cells (e.g., a first CC and a second CC), and may transmit configuration information of the plurality of cells to a terminal. In addition, the base station may configure a search space set in each of the plurality of cells, and may transmit configuration information of the search space set to the terminal. The first carrier (e.g., first CC) and the second carrier (e.g., second CC) may be aggregated in the terminal. The terminal may monitor a DCI for scheduling a PDSCH or PUSCH of the first carrier in the first carrier and the second carrier. For example, the first carrier may be a PCell, and the second carrier may be an SCell. In this case, bandwidth part switching may be applied in the SCell. The terminal may perform bandwidth part switching from a first bandwidth part (e.g., first BWP) to a second bandwidth part (e.g., second BWP) according to a bandwidth part switching indication or configuration, and a transmission/reception operation in the second bandwidth part may be performed from a fourth slot.

In the above-described case, a slot boundary of the PCell and a slot boundary of the SCell may not be aligned with each other from a time when the bandwidth part switching of the SCell is completed. In addition, from the time when the bandwidth part switching of the SCell is completed, a slot of the SCell may not be completely included in each slot of the PCell (e.g., a reference time for search space set mapping). For example, the fourth slot of the SCell may be included in both a second slot and a third slot of the PCell. That is, a part of the fourth slot of the SCell may be included in the second slot of the PCell, and the remainder of the fourth slot of the SCell may be included in the third slot of the PCell. Each of the second slot and the third slot of the PCell may be regarded as a reference time. In this case, the mapping of the search space sets by the above-described method may be difficult to perform. Alternatively, the method of mapping the search space sets may be performed as being transformed into a complex form.

Accordingly, when the terminal performs PDCCH monitoring in a plurality of scheduling cells for PDSCH/PUSCH scheduling for one scheduled cell (e.g., PCell), an application time of bandwidth part switching for the scheduling cell may be restricted. Specifically, the time when the switching to the second bandwidth part in the scheduling cell is completed (or the time when the transmission/reception operation of the second bandwidth part starts) may be restricted to a specific slot(s) (e.g., slot having a start time aligned with a boundary of a reference time) among slots of the corresponding scheduling cell or a specific time (e.g., first symbol) of the specific slot(s). Alternatively, the time when switching to the second bandwidth part is completed in each scheduling cell (or the time when the transmission/reception operation of the second bandwidth part starts) may be restricted to a slot having a start time aligned with a reference numerology (or, cell or bandwidth part corresponding to the reference numerology) or a specific time (e.g., first symbol) of the corresponding slot. According to the above-described method, switching of the bandwidth part may not occur within the reference time, and a change in the search space set configuration or a change in the numerology applied to the transmission of the search space set may not occur in the middle of the reference time. Accordingly, the above-described method of mapping the search space sets may be easily performed.

The above-described method for restricting the application time of bandwidth part switching may be equally applied to an activation time or deactivation time of a scheduling cell. That is, the activation time of the scheduling cell (or a start time of a transmission/reception operation in the activated scheduling cell) may be restricted to a specific slot(s) (e.g., slot having a start time aligned with a boundary between reference times, slot having a start time aligned with a slot boundary according to the reference numerology (or, cell or bandwidth part corresponding to the reference numerology), or the like) or a specific time (e.g., first symbol) of the specific slot(s). An activation or deactivation operation of the scheduled cell may be configured to the terminal through higher layer signaling (e.g., RRC signaling, MAC CE signaling). Alternatively, an activation or deactivation operation of the scheduled cell may be indicated to the terminal through a DCI. For example, the DCI may include information indicating activation or deactivation of the scheduling cell. Alternatively, the DCI may include information indicating bandwidth part switching of the scheduling cell. Also, the above-described activation and deactivation operations may refer to transition operations to a dormant or non-dormant (or active) state. For example, the DCI may include information instructing the terminal to switch from the first bandwidth part to the second bandwidth part in the scheduling cell, the first bandwidth part may be a dormant bandwidth part, and the second bandwidth part may be a non-dormant (or active) bandwidth part. Alternatively, the first bandwidth part may be a non-dormant (or active) bandwidth part, and the second bandwidth part may be a dormant bandwidth part. According to the above-described method, a transition to the activated or deactivated state (or dormant or non-dormant state) of the scheduling cell may not occur in the middle of the reference time, and the above-described method of mapping the search space sets may be easily performed.

The above-described method of restricting the application time of the bandwidth part switching may be equally applied to an application time of a search space set group (SSSG) switching of the terminal in the scheduling cell. The terminal may switch an SSSG that the terminal monitors according to configuration or indication by the base station. The SSSG switching may be performed based on a slot boundary. In this case, a switching time of the SSSG (e.g., a time (e.g., slot) when the terminal starts monitoring the switched SSSG) may be restricted to a specific slot(s) (e.g., slot having a start time aligned with a boundary of the reference time, slot having a start time aligned with a slot boundary according to the reference numerology (e.g., cell or bandwidth part corresponding to the reference numerology) among slots of the corresponding scheduling cell) or a specific time (e.g., first symbol) of the specific slot(s). The SSSG switching may be indicated to the terminal through a DCI (e.g., DCI for scheduling a PDSCH, DCI for scheduling a PUSCH, group common DCI (e.g., DCI format 2_0), or the like). According to the above-described method, the SSSG may not be switched in the middle of the reference time, and the above-described method of mapping the search space sets may be easily performed.

### [QCL of PDSCH]

The terminal may improve a PDSCH reception performance by assuming that a PDSCH DM-RS is QCLed with another reference signal or SS/PBCH block. For example, the terminal may determine a QCL source and a QCL type of a PDSCH based on TCI state information configured or indicated by the base station or a predetermined rule.

In case of a PDSCH scheduled by a DCI, a QCL applied to the PDSCH may vary according to a scheduling offset. Here, the scheduling offset may refer to a distance or symbol offset between a reception time of the DCI (e.g., the last symbol of the DCI) and a reception time of the PDSCH (e.g., a start symbol of the PDSCH). When the scheduling offset is equal to or greater than a threshold, the QCL of the PDSCH may follow a TCI state indicated through the scheduling DCI or a TCI state (or QCL) of a CORESET in which the scheduling DCI is transmitted. On the other hand, when the scheduling offset is smaller than the threshold, the QCL of the PDSCH may follow a default QCL. When the TCI state information(s) configured for the PDSCH include a reception beam-related QCL parameter (e.g., QCL type D), the operation of applying the QCL according to the scheduling offset may be performed. Otherwise, the QCL of the PDSCH may be determined regardless of the scheduling offset.

The threshold for applying the QCL may be defined as a capability of the terminal, and the terminal may report the threshold(s) supported by the terminal to the base station. Alternatively, the threshold may be configured by the base station to the terminal. The threshold value may refer to a time obtained by summing a time required for the terminal to decode a PDCCH and a beam switching time, and may be defined as the number of symbols. The terminal may assume the default QCL (e.g., default beam) for a time period (e.g., symbols) corresponding to the threshold from a next symbol of the monitored CORESET, and may receive a downlink signal (e.g., PDSCH) based on the assumption. Hereinafter, the time period in which the default QCL for the PDSCH is assumed may be referred to as a 'default beam period'. If a DCI scheduling a PDSCH is detected within a default beam period, the terminal may apply the default QCL (e.g., default beam) to the entire PDSCH period, and may receive the PDSCH based on the default QCL.

According to the above-described exemplary embodiment, the terminal may monitor a scheduling DCI for the PCell in a plurality of serving cells (e.g., PCell and SCell). In this case, the default beam periods may be determined by CORESETs (e.g., time resources of the CORESETs) belonging to the plurality of serving cells. In this case, the CORESET may refer to a CORESET, PDCCH candidates, search space set, PDCCH monitoring occasions, or the like that the terminal monitors for PDSCH reception.

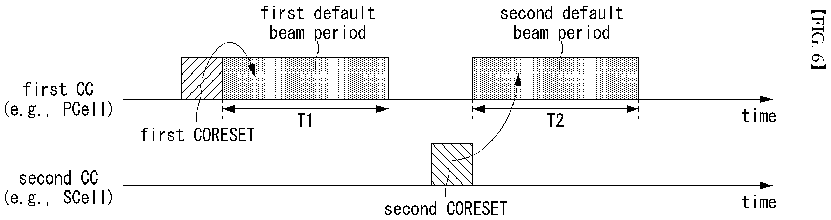

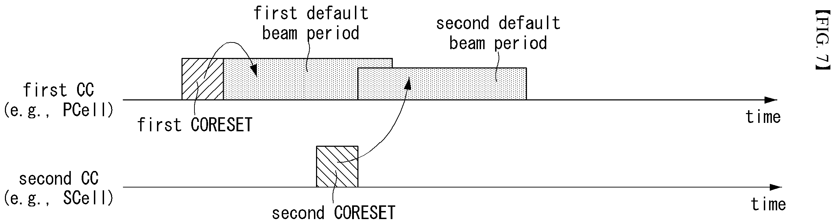

FIG. 6 is a conceptual diagram illustrating a first method of applying a PDSCH default QCL by a plurality of serving cells, and FIG. 7 is a conceptual diagram illustrating a second method of applying a PDSCH default QCL by a plurality of serving cell.

Referring to FIGS. 6 and 7, a base station may configure a plurality of cells (e.g., a first CC and a second CC), and may transmit configuration information of the plurality of cells to a terminal. In addition, the base station may configure a search space set in each of the plurality of cells, and may transmit configuration information of the search space set to the terminal. The first carrier and the second carrier may be aggregated in the terminal. For example, the first carrier may be a PCell, and the second carrier may be an SCell. According to the above-described exemplary embodiment, the terminal may perform PDCCH monitoring in the PCell and the SCell for scheduling of the PCell. In this case, for PDSCH reception in the PCell, the terminal may assume a default QCL in a default beam period determined by each CORESET of the PCell and a default beam period determined by each CORESET of the SCell (e.g., a union of the default beam periods). The terminal may assume a default QCL in a first default beam period determined by a first CORESET belonging to the PCell and a second default beam period determined by a second CORESET belonging to the SCell, and may receive a downlink signal (e.g., PDSCH) of the PCell based on the default QCL. Here, each default beam period may be determined by the threshold of the scheduling offset of the PDSCH according to the above-described method.

The length of the default beam period may be determined by a capability report of the terminal and a numerology of the serving cell (e.g., cell to which the corresponding CORESET belongs). Therefore, for the same terminal, the length of the default beam period may be the same or different for each serving cell to which the CORESET belongs. In the exemplary embodiment shown in FIG. 6, the length of the first default beam period may be referred to as T1, and the length of the second default beam period may be referred to as T2. That is, the threshold of the scheduling offset for the first CORESET may be T1, and the threshold of the scheduling offset for the second CORESET may be T2. In this case, T1 and T2 may generally be different from each other. Alternatively, T1 may be the same as T2. For example, when numerologies of the PCell and the SCell (or numerologies of the bandwidth parts of the PCell and the SCell) are the same, T1 and T2 may have the same value. When the numerologies of the PCell and the SCell (or the numerologies of the bandwidth parts of the PCell and the SCell) are different from each other, T1 and T2 may have different values. Alternatively, T1 and T2 may have the same value irrespective of the numerologies of the scheduling cells, and may be determined based on a numerology of one cell (or bandwidth part of the cell) among the scheduling cells. Here, the numerology may include a subcarrier spacing and/or a CP type.

In the exemplary embodiment shown in FIG. 7, the default beam period (e.g., the first default beam period) determined by the CORESET of the PCell may overlap the default beam period (e.g., the second default beam period) determined by the CORESET of the SCell. In this case, if a default QCL by the CORESET (e.g., self-scheduling) of the PCell is different from a default QCL by the CORESET (e.g., cross-carrier scheduling) of the SCell, a default QCL of one serving cell (e.g., PCell) may be applied. For example, in the exemplary embodiment shown in FIG. 7, the terminal may apply the same default QCL to the first and second default beam periods. For example, the terminal may apply the default QCL by the CORESET (e.g., the first CORESET) of the PCell to the first and second default beam periods. Alternatively, the terminal may apply the default QCL by the CORESET (e.g., the second CORESET) of the SCell to the first and second default beam periods. Alternatively, the terminal may apply a default QCL to the first and second default beam periods, which is determined independently regardless of the default QCL by the CORESET (e.g., the first CORESET) of the PCell and the default QCL by the CORESET (e.g., the second CORESET) of the SCell. The terminal may use one default QCL (e.g., common default QCL) for PDSCH reception for a plurality of serving cells. That is, one default QCL may be applied to one scheduled cell (i.e., PCell) regardless of whether the default beam periods overlap.

Alternatively, a default QCL may be individually applied to each of default beam periods for a plurality of scheduling cells. For example, in the exemplary embodiment shown in FIG. 7, the terminal may apply the default QCL by the CORESET (e.g., first CORESET) of the PCell in the first default beam period, and may apply the default QCL by the CORESET (e.g., second CORESET) of the SCell in the second default beam period. In this case, one default QCL may be applied to a period in which the first default beam period and the second default beam period overlap. One default QCL may be one of the default QCL by the CORESET (e.g., first CORESET) of the PCell and the default QCL by the CORESET (e.g., second CORESET) of the SCell. Alternatively, one default QCL may be a default QCL independently determined regardless of the default QCLs by the CORESETs of the PCell and SCell.

Alternatively, a default QCL may be used for only one scheduling cell. For example, in case of scheduling by a DCI transmitted in the same serving cell (e.g., PCell) as the scheduled cell, it may be allowed for the scheduling offset of the PDSCH to have a value smaller than the threshold. In case of scheduling by a DCI transmitted in another scheduling cell (e.g., SCell), the terminal may expect that the scheduling offset of the PDSCH is always equal to or greater than the threshold.

The above-described default QCL of the PDSCH may be determined as a QCL applied to a specific control channel. Specifically, the default QCL of the PDSCH may be a QCL applied to a specific control channel determined based on a time to which the default beam period belongs (e.g., a slot to which the default beam period belongs). For example, the terminal may consider a TCI state or QCL of a specific CORESET (e.g., CORESET having the smallest ID) included in the most recent slot including at least one CORESET as the default QCL of the PDSCH. The most recent slot may be the latest slot including at least one CORESET among slots preceding the slot to which the default beam period belongs. Alternatively, the most recent slot may be the latest slot including at least one CORESET from among the slot to which the default beam period belongs and the slots preceding the corresponding slot. Alternatively, the default QCL of the PDSCH may follow one of TCI state(s) configured or activated for the PDSCH. For example, the default QCL of the PDSCH may follow one TCI state (e.g., the TCI state having the lowest ID) among the activated TCI state(s) for the PDSCH.

Alternatively, the default QCL of the PDSCH may be determined by a combination of the TCI state (or QCL) of the control channel and the TCI state for the PDSCH. For example, if there is slot(s) including at least one CORESET within a time window, the terminal may assume a TCI state or QCL of a specific CORESET (e.g., CORESET having the smallest ID) included in the most recent slot among the corresponding slot(s) as the default QCL of the PDSCH. If there is no slot including a CORESET within the time window, the default QCL of the PDSCH may follow one TCI state (e.g., TCI state having the lowest ID or TCI state configured for the corresponding purpose by the base station) among the TCI state(s) (e.g., activated TCI state(s)) for the PDSCH. The position of the time window may be determined based on the slot to which the CORESET monitored for the corresponding PDSCH scheduling belongs (or the slot to which the default beam period belongs). For example, the time window may be defined as L slot(s) before the slot to which the CORESET monitored for the corresponding PDSCH scheduling belongs (or the slot to which the default beam period belongs). L may be a natural number. Alternatively, the time window may be defined as the slot to which the CORESET monitored for the corresponding PDSCH scheduling belongs (or the slot to which the default beam period belongs) and (M-1) slot(s) preceding the corresponding slot (e.g., a total of M slots). M may be a natural number. L and/or M may be predefined in the technical specification. Alternatively, the base station may configure L and/or M to the terminal. The L slots or M slots may be physically contiguous slots.

### [Type 2 HARQ-ACK codebook]

The terminal may generate a HARQ-ACK codebook including HARQ-ACK information of the PDSCH, and may report the HARQ-ACK codebook to the base station. The HARQ-ACK codebook may be classified into a HARQ-ACK codebook having a semi-static size (hereinafter referred to as `type 1 HARQ-ACK codebook') and a HARQ-ACK codebook having a dynamic size (hereinafter referred to as `type 2 HARQ-ACK codebook'). The HARQ-ACK codebook (or payload) may consist of a bit string, and each bit of the bit string may correspond to one piece of downlink HARQ-ACK information. The size of the HARQ-ACK codebook may be 1 or more.

The type 2 HARQ-ACK codebook may be generated for a set of PDCCH monitoring occasion(s). Each bit of the type 2 HARQ-ACK codebook may correspond to each PDCCH monitoring occasion in which the terminal receives a DCI (or each PDCCH monitoring occasion in which the terminal assumes that the base station transmits a DCI). The PDCCH monitoring occasions may be indexed in ascending order of the cell IDs (e.g., physical layer cell IDs) of the serving cells, and then indexed in ascending order of start times (e.g., start symbols) of the search space sets. The corresponding HARQ-ACK information in the order of the indexes of the PDCCH monitoring occasions may constitute the payload of the type 2 HARQ-ACK codebook. In case of cross-carrier scheduling, each serving cell may be a scheduled cell, and the cell ID of each serving cell may be the cell ID of each scheduled cell. At each start time, one PDCCH monitoring occasion may be assumed for each serving cell (e.g., scheduled cell).

According to the above-described exemplary embodiment, the terminal may monitor a scheduling DCI for the PCell in a plurality of serving cells (e.g., PCell and SCell).

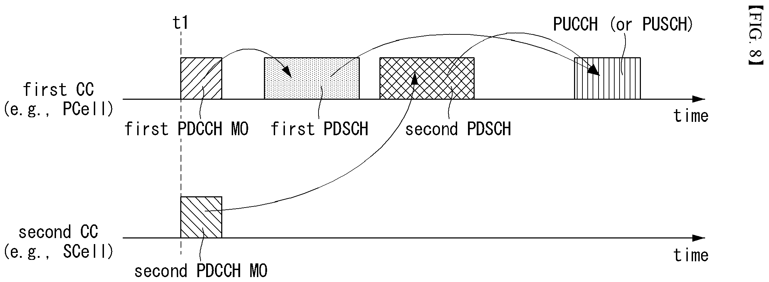

FIG. 8 is a conceptual diagram illustrating a method for PDSCH scheduling by a plurality of serving cells.

Referring to FIG. 8, a base station may configure a plurality of cells (e.g., a first CC and a second CC), and may transmit configuration information of the plurality of cells to a terminal. In addition, the base station may configure a search space set in each of the plurality of cells, and may transmit configuration information of the search space set to the terminal. The first carrier and the second carrier may be aggregated in the terminal. For example, the first carrier may be a PCell, and the second carrier may be an SCell. According to the above-described exemplary embodiment, the terminal may perform PDCCH monitoring in the PCell and the SCell for scheduling of the PCell.

In this case, PDCCH monitoring occasions configured in a plurality of serving cells may overlap in time and may start at the same start time. A PDCCH monitoring occasion (e.g., first PDCCH monitoring occasion (MO)) configured in the PCell and a PDCCH monitoring occasion (e.g., second PDCCH MO) configured in the SCell may start at the same start time (e.g., the same symbol). The same start time may be t1. The terminal may receive a DCI for the PCell in the first PDCCH monitoring occasion (e.g., first PDCCH MO), and may receive a first PDSCH based on the received DCI. In addition, the terminal may receive a DCI for the PCell in the second PDCCH monitoring occasion (e.g., second PDCCH MO), and may receive a second PDSCH based on the received DCI. Alternatively, the terminal may receive scheduling information of a PDSCH in each of a plurality of PDCCH monitoring occasions having the same start time in different serving cells for one scheduled cell (e.g., PCell).

HARQ-ACK information of PDSCHs (e.g., first PDSCH and second PDSCH) from a plurality of PDCCH monitoring occasions having the same start time in different serving cells for one scheduled cell (e.g., PCell) may be multiplexed in the same HARQ-ACK codebook (e.g., type 2 HARQ-ACK codebook), and the HARQ-ACK codebook may be transmitted to the base station on the same uplink channel (e.g., PUCCH, PUSCH). As a method for supporting this operation, the PDCCH monitoring occasion(s) corresponding to the same type 2 HARQ-ACK codebook may be indexed according to the cell IDs of the scheduling cells, the cell ID of the scheduled cell, and/or start times (e.g., start symbols) of the search space sets. For example, the PDCCH monitoring occasion(s) may be indexed in ascending order of the cell IDs of the scheduling cells (or scheduled cells), then may be indexed in ascending order of the cell ID of the scheduled cell (or scheduling cell), and finally indexed in ascending order of the start times of the search space sets. Alternatively, the PDCCH monitoring occasion(s) corresponding to the same type 2 HARQ-ACK codebook may be indexed according to the cell ID of the serving cell (e.g., scheduled cell), the start time (e.g., start symbol) of the search space set, and/or the transmission time (e.g., start time, start symbol) of the PDSCH. For example, the PDCCH monitoring occasions may be indexed in ascending order of the cell ID of the serving cell (e.g. scheduled cell), then may be indexed in ascending order of the start times of the search space sets, and finally may be indexed in ascending order of transmission times (e.g., start times) of the PDSCHs. The above-described indexing order of the PDCCH monitoring occasions may be merely an example, and the indexing of the PDCCH monitoring occasions may be performed in another order. In addition, the above-described indexing in ascending order may be merely an example, and indexing of the PDCCH monitoring occasions may also be performed in descending order or the like.

Alternatively, for one scheduled cell (e.g., PCell), a mapping order, in which HARQ-ACK responses for PDSCHs (e.g., first PDSCH and second PDSCH) scheduled from a plurality of PDCCH monitoring occasions having the same start time are mapped to the payload of the type 2 HARQ-ACK codebook, may be determined by downlink association indexes (DAIs) (e.g., counter DAI (C-DAI) or total DAI (T-DAI)) of corresponding PDCCHs.

Alternatively, the terminal may expect that up to one PDSCH is scheduled from PDCCH monitoring occasions having the same start time in different serving cells for one scheduled cell (e.g., PCell). For example, the terminal may not expect a plurality of PDSCHs to be scheduled from PDCCH monitoring occasions having the same start time. In the exemplary embodiment shown in FIG. 8, the base station may transmit a scheduling DCI for the PCell only in one PDCCH monitoring occasion among the first PDCCH monitoring occasion and the second PDCCH monitoring occasion. The terminal may assume the above-described operation of the base station, and may perform the PDCCH monitoring operation for the PCell according to the assumption. In the exemplary embodiment, the terminal may receive only one PDSCH among the first and second PDSCHs, and may report a type 2 HARQ-ACK codebook including HARQ-ACK information for the received PDSCH to the base station. In this case, the index of the PDCCH monitoring occasion may be determined by the cell ID of the serving cell (e.g., scheduled cell) and/or the start time (e.g., start symbol) of the search space set as described above.

### [Dynamic activation/deactivation of cross-carrier scheduling]

Cross-carrier scheduling from the SCell to the PCell may be dynamically activated or deactivated. For example, self-scheduling (e.g., self-scheduling by the PCell) and cross-carrier scheduling (e.g., cross-scheduling by the SCell) may be dynamically switched for a serving cell (e.g., PCell) according to a traffic condition (e.g., traffic condition of the PCell). In particular, since available resources of the PCell are also affected by a traffic condition of another communication system (e.g., LTE communication system) when the dynamic spectrum sharing technology is applied, fast switching to cross-carrier scheduling for the PCell may be helpful to distribute the traffic and maintain the transmission performance. The above-described scheduling method may be dynamically activated or deactivated. For example, whether to apply the exemplary embodiments of (Method 100) may be dynamically indicated to the terminal. According to an exemplary embodiment, a cell in which the terminal monitors a CSS set for PCell scheduling may be fixed to the PCell, and a cell in which the terminal monitors a USS set for PCell scheduling may be dynamically switched to the PCell or the SCell.

The above-described operation may be performed through bandwidth part switching. For example, the above-described operation may be performed through bandwidth part switching of the SCell, which is a cell for cross-carrier scheduling of the PCell. This operation may be referred to as (Method 200). (Method 200) will be described below in detail.

For (Method 200), the terminal may receive configuration information of a plurality of bandwidth parts of the SCell. That is, in the SCell, a plurality of bandwidth parts may be configured to the terminal. The plurality of bandwidth parts may include first and second bandwidth parts. The first bandwidth part may be configured to perform cross-carrier scheduling for the PCell. That is, monitoring of a scheduling DCI for the PCell in a search space set of the first bandwidth part may be configured to the terminal. The second bandwidth part may not be configured to perform cross-carrier scheduling for the PCell. That is, the terminal may be configured not to monitor a scheduling DCI for the PCell in a search space set of the second bandwidth part. Accordingly, whether cross-carrier scheduling is applied may be configured for each bandwidth part of the scheduling cell.

Each of the first and second bandwidth parts in the SCell may be dynamically activated or deactivated. Dynamic bandwidth part switching from the first bandwidth part to the second bandwidth part may be performed. Alternatively, dynamic bandwidth part switching from the second bandwidth part to the first bandwidth part may be performed. In an exemplary embodiment, without loss of generality, only dynamic bandwidth part switching from the second bandwidth part to the first bandwidth part may be considered. The cross-carrier scheduling from the SCell to the PCell may be deactivated by switching from the first bandwidth part to the second bandwidth part. The cross-carrier scheduling from the SCell to the PCell may be activated by switching from the second bandwidth part to the first bandwidth part.

According to a first exemplary embodiment, switching between the first bandwidth part and the second bandwidth part may be indicated to the terminal by a DCI (e.g., non-fallback DCI) or a DCI format (e.g., non-fallback DCI format). The non-fallback DCI format may include DCI formats 0_1, 1_1, 0_2, 1_2, and the like. For example, the first or second bandwidth part may be activated by a bandwidth part indicator of the non-fallback DCI format, and the remaining bandwidth part may be deactivated. The non-fallback DCI format may be transmitted through the SCell. Alternatively, the non-fallback DCI format may be transmitted through the PCell or another serving cell. The non-fallback DCI format may be a DCI or a scheduling DCI for an arbitrary serving cell. Alternatively, the non-fallback DCI format may be limited to a scheduling DCI for a specific serving cell (e.g., PCell). According to a second exemplary embodiment, switching between the first bandwidth part and the second bandwidth part may be indicated to the terminal by a group common DCI or a group common DCI format (e.g., DCI format 2_X, X is an integer greater than or equal to 0). For example, switching between the first bandwidth part and the second bandwidth part may be triggered by a DCI format 2_6.

The above-described method may be performed for a plurality of serving cells (e.g., a plurality of scheduling cells for the same scheduled cell). For example, the PCell may be cross-carrier scheduled by a plurality of SCells, and activation or deactivation of cross-carrier scheduling of the plurality of SCells may be indicated through one DCI format.

The method described above may be used in combination with timer-based bandwidth part switching. For example, a timer may be set in the terminal for switching a bandwidth part of the SCell. When the timer expires, the terminal may perform bandwidth part switching from the first bandwidth part to the second bandwidth part. Alternatively, when the timer expires, the terminal may perform bandwidth part switching from the second bandwidth part to the first bandwidth part. The bandwidth part activated by the timer may be a fallback bandwidth part, and the fallback bandwidth part may be configured in the terminal. The timer may be started or restarted when the first or second bandwidth part is activated.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a terminal in a communication system, the operation method comprising:
receiving configuration information of a plurality of cells from a base station;
receiving, from the base station, configuration information of a first search space set for scheduling of a first cell, the first search space set being configured in the first cell among the plurality of cells;
receiving, from the base station, configuration information of a second search space set for scheduling of the first cell, the second search space set being configured in a second cell among the plurality of cells;
receiving downlink control information (DCI) from the base station in one of the first search space set and the second search space set by performing a first monitoring operation on the first search space set and a second monitoring operation on the second search space set; and
receiving a data channel from the base station based on the DCI in the first cell,
wherein the first search space set and the second search space set are UE-specific search space sets (USSs).

2. The operation method according to claim 1, wherein the first monitoring operation includes a blind decoding operation on physical downlink control channel (PDCCH) candidate(s) included in the first search space set, the second monitoring operation includes a blind decoding operation on PDCCH candidate(s) included in the second search space set, and the first monitoring operation and the second monitoring operation are both performed within a reference time.

3. The operation method according to claim 2, wherein an upper limit value of a number of PDCCH blind decodings for scheduling of the first cell is applied for each reference time, and the reference time is determined as one slot of one cell among the first cell and the second cell according to subcarrier spacings applied to the first cell and the second cell.

4. The operation method according to claim 1, wherein the data channel is a physical downlink shared channel (PDSCH) including unicast data.

5. The operation method according to claim 1, further comprising receiving, from the base station, configuration information of a third search space set for scheduling of the first cell, the third search space set being configured in the first cell,
wherein monitoring operations are performed on the first search space set, the second search space set, and the third search space set, and the third search space set is a common search space (CSS) set.

6. The operation method according to claim 1, wherein zero padding is applied to a first DCI format monitored in the first search space set or the first DCI format monitored in the second search space set so that a size of the first DCI format monitored in the first search space set is aligned with a size of the first DCI format monitored in the second search space set, and the DCI has the first DCI format.

7. The operation method according to claim 6, wherein a monitoring operation on the first DCI format is configured by a radio resource control (RRC) message from the base station, and the first DCI format is a DCI format 1_1 or DCI format 1_2.

8. The operation method according to claim 1, wherein presence or absence of one or more fields in the DCI is determined according to a search space set or cell in which the DCI is received.

9. The operation method according to claim 8, wherein the one or more fields include a carrier indicator field (CIF).

10. The operation method according to claim 1, wherein the first cell is a primary cell, and the second cell is a secondary cell.

11. An operation method of a base station in a communication system, the operation method comprising:
transmitting configuration information of a plurality of cells to a terminal;
transmitting, to the terminal, configuration information of a first search space set for scheduling of a first cell, the first search space set being configured in the first cell among the plurality of cells;
transmitting, to the terminal, configuration information of a second search space set for scheduling of the first cell, the second search space set being configured in a second cell among the plurality of cells;
transmitting downlink control information (DCI) to the terminal in one of the first search space set and the second search space set; and
transmitting a data channel to the terminal based on the DCI in the first cell,
wherein the first search space set and the second search space set are UE-specific search space sets (USSs).

12. The operation method according to claim 11, wherein the data channel is a physical downlink shared channel (PDSCH) including unicast data.

13. The operation method according to claim 11, further comprising transmitting, to the terminal, configuration information of a third search space set for scheduling of the first cell, the third search space set being configured in the first cell,
wherein the DCI is transmitted in one search space set among the first search space set, the second search space set, and the third search space set, and the third search space set is a common search space (CSS) set.

14. The operation method according to claim 11, wherein zero padding is applied to a first DCI format monitored in the first search space set or the first DCI format monitored in the second search space set so that a size of the first DCI format monitored in the first search space set is aligned with a size of the first DCI format monitored in the second search space set, and the DCI has the first DCI format.

15. The operation method according to claim 14, wherein a monitoring operation of the first DCI format is configured by a radio resource control (RRC) message from the base station, and the first DCI format is a DCI format 1_1 or DCI format 1_2.

16. The operation method according to claim 11, wherein presence or absence of one or more fields in the DCI is determined according to a search space set or cell in which the DCI is received, and the one or more fields include a carrier indicator field (CIF).

17. The operation method according to claim 11, wherein the first cell is a primary cell, and the second cell is a secondary cell.

18. A terminal, the terminal comprising:
a processor;
a memory electronically communicating with the processor; and
instructions stored in the memory,
wherein when executed by the processor, the instructions cause the terminal to:
receive configuration information of a plurality of cells from a base station;
receive, from the base station, configuration information of a first search space set for scheduling of a first cell, the first search space set being configured in the first cell among the plurality of cells;
receive, from the base station, configuration information of a second search space set for scheduling of the first cell, the second search space set being configured in a second cell among the plurality of cells;
receive downlink control information (DCI) from the base station in one of the first search space set and the second search space set by performing a first monitoring operation on the first search space set and a second monitoring operation on the second search space set; and
receive a data channel from the base station based on the DCI in the first cell, wherein the first search space set and the second search space set are UE-specific search space sets (USSs).

19. The terminal according to claim 18, wherein the first monitoring operation and the second monitoring operation are both performed within a reference time, and the reference time is determined as one slot of one cell among the first cell and the second cell according to subcarrier spacings applied to the first cell and the second cell.

20. The terminal according to claim 18, wherein the instructions further cause the terminal to receive, from the base station, configuration information of a third search space set for scheduling of the first cell, the third search space set being configured in the first cell,
wherein monitoring operations are performed on the first search space set, the second search space set, and the third search space set, and the third search space set is a common search space (CSS) set.
